# FASCICULE DE BREVET EUROPEEN

(11) **EP 1 373 353 B1**
(45) Date de publication et mention de la délivrance du brevet: **10.03.2010**
(21) Numéro de dépôt: 02753740.6
(22) Date de dépôt: 27.03.2002
(51) Int. Cl.: C08G 18/79, C07D 251/34, C09D 175/04

(54) **COMPOSITION POLYISOCYANATE DE FAIBLE VISCOSITE POSSEDANT UNE FONCTIONNALITE ELEVEE ET PROCEDE DE PREPARATION**
NIEDERVISKOSE POLYISOCYANATZUSAMMENSETZUNG MIT HOHER FUNKTIONALITÄT UND HERSTELLUNGSVERFAHREN DAFÜR
LOW-VISCOSITY POLYISOCYANATE COMPOSITION HAVING A HIGH FUNCTIONALITY AND THE PREPARATION METHOD THEREOF

(30) Priorité: 27.03.2001 FR 0104117; 27.03.2001 US 818884
(43) Date de publication de la demande: 02.01.2004
(73) Titulaire: RHODIA CHIMIE, 92512 Boulogne Billancourt Cedex (FR)
(72) Inventeur: BERNARD, Jean-Marie, 69440 Mornant (FR); HAN, Qiwen, Lawrenceville, NJ 08648 (US); CHEN, Ming J., Windsor, NJ 08550 (US)
(74) Mandataire: Blot, Philippe Robert Emile
(86) Numéro de dépôt international: PCT/FR2002/001073
(87) Numéro de publication internationale: WO 2002/077057

(56) Documents cités:
- EP-A- 0 337 116
- EP-A- 0 495 307
- EP-A- 0 630 928
- DE-A- 4 405 054

## Description

L'invention concerne une composition polyisocyanate éventuellement masquée de relativement faible viscosité possédant une fonctionnalité moyenne élevée d'au moins 3 ou plus.

L'invention concerne également un procédé de préparation d'une composition polyisocyanate de faible viscosité possédant une fonctionnalité moyenne élevée en groupes isocyanates.

L'invention concerne de plus des compositions de revêtement réticulables, en particulier une composition de revêtement polyuréthanne, notamment utile dans le domaine de la finition automobile.

Des compositions polyisocyanates masquées ou non possédant une fonctionnalité moyenne supérieure à 2 sont généralement obtenues par cyclotrimérisation catalytique de diisocyanates et contiennent des composés comprenant des groupes isocyanurates.

De telles compositions et procédés pour leur préparation sont décrits dans, par exemple, US 4,324,879 et US 4,412,073. Bien que ces compositions possèdent des propriétés remarquables, elles ont cependant une viscosité élevée qui nécessite leur dilution par des solvants organiques.

Une des solutions préconisées à cet effet est de stopper la réaction de cyclotrimérisation à un très faible degré de trimérisation pour augmenter la quantité de polyisocyanates monoisocyanurates et réduire la quantité de polyisocyanates isocyanurates possédant plus d'un cycle isocyanurate.

Ainsi, le brevet US 4,801,663 décrit un procédé de cyclotrimérisation d' 1,6-hexaméthylène diisocyanate (HDI) dans lequel la trimérisation est arrêtée à un faible taux de transformation.

L'inconvénient d'un tel procédé est cependant une diminution importante du rendement global de la réaction qui nécessite d'éliminer du produit réactionnel final une quantité importante de monomères n'ayant pas réagi, ce qui a pour effet d'augmenter considérablement le coût du procédé.

Une autre solution proposée consiste à soumettre les monomères isocyanates à une réaction de cyclodimérisation avant, après ou pendant l'étape de cyclotrimérisation pour aboutir à une composition polyisocyanate possédant des composés isocyanates à groupes isocyanurates et des composés isocyanates à groupes urétidinediones (1,3-diazétidine-2,4-diones), notamment des composés mono-urétidinediones.

L'inconvénient de ce procédé est toutefois une diminution de la fonctionnalité moyenne en groupes NCO du produit réactionnel en raison d'une proportion plus ou moins élevée de composés urétidinediones.

Une autre solution préconisée dans US 4,810,820 consiste à ajouter au mélange réactionnel un alcool avant, après ou pendant la réaction de trimérisation pour obtenir un mélange polyisocyanate comportant des groupes isocyanurates et des groupes allophanates.

Toutefois, comme précédemment, l'inconvénient de cette méthode réside en une diminution de la fonctionnalité de la composition polyisocyanate finale, notamment en raison de la présence d'allophanates « vrais », composés constitués de deux chaînes monomères d'isocyanates et d'une fonction allophanates, dont la fonctionnalité est de 2 dans le cas de diisocyanates, ou de polyallophanates.

De telles compositions polyisocyanates à haute fonctionnalité et à faible viscosité peuvent être utiles pour la formation de revêtement, par exemple de type polyuréthanne, notamment dans l'industrie automobile.

Généralement, la finition d'origine sur un véhicule automobile consiste en plusieurs couches de revêtement. Habituellement, la première couche est du phosphate de zinc ou de fer pour éviter la corrosion. La seconde couche est un primaire déposé de manière électrostatique, pour obtenir un meilleur aspect et améliorer l'adhérence, seconde couche sur laquelle un revêtement de base ou coloré avec des pigments est appliqué afin de protéger la qualité de la finition sur le panneau. Des revêtements à base de polyol acrylique sont particulièrement utiles comme revêtement de couverture pour donner une finition solide et durable.

Les revêtements de finition pour automobile sont utilisés dans le service après-vente automobile, par exemple, comme faisant partie des procédés de réparation, pour reproduire l'apparence et la durabilité des finitions d'origine des véhicules automobiles. Cependant, le procédé d'application du revêtement de finition de réparation est différent de celui du revêtement de finition d'origine. Dans le procédé de fabrication d'origine, le corps de l'automobile peut être revêtu et réticulé à hautes températures. En revanche, la finition de réparation ne permet pas des températures de réticulation supérieures à 80°C, puisque certaines parties de l'automobile elle-même, tels les pneus, ne peuvent supporter une température plus élevée. C'est pourquoi les revêtements de finition pour réparation sont habituellement formulés de manière à pouvoir être réticulé à température ambiante.

Il existe un intérêt permanent dans le fait de réduire le temps de séchage à température ambiante des revêtements de finition de réparation automobiles à base de polyol acrylique, afin de réduire l'adhérence de la poussière sur la surface de la peinture et d'augmenter la production, sans compromettre les caractéristiques souhaitées de ces revêtements, par exemple la dureté, la durabilité et l'apparence.

De nombreux efforts ont été faits pour augmenter la vitesse de séchage en ajustant le composant polyol acrylique (voir par exemple les brevets US 5,759,631 et US 4,758,625). D'une manière générale, de l'augmentation la température de transition vitreuse (T_{g}) du polyol résulte la diminution du séchage de surface (voir par exemple les brevets US 5,279,862 et US 5,314,953). Cependant une Tg élevée peut produire des effets néfastes sur les propriétés du revêtement, comme une plus grande fragilité.

Un autre moyen d'accroître la vitesse de séchage est d'ajuster le composant isocyanate. Des oligomères isocyanurates dérivés du 1,6-hexaméthylène diisocyanate (HDI) sont souvent utilisés, à cause de leur grande réactivité, comme agents de réticulation des finitions de réparation automobiles à base de polyol acrylique. Pour augmenter la vitesse de séchage de surface, d'autres oligomères, habituellement des trimères, d'isophorone diisocyanate (IPDI) peuvent être incorporés à la formulation. Grâce aux températures de transition vitreuse plus élevées pour les oligomères d'IPDI que pour les isocyanurates de HDI, la dureté de surface se développe plus vite que celle des compositions ne comprenant pas d'oligomères d'IPDI et, par conséquent, la vitesse de séchage apparente est plus élevée. Cependant, comme la réactivité des oligomères d'IPDI est plus faible que celle des oligomères d'HDI, le séchage à coeur (corrélé à la vitesse de réticulation de la masse) est plus faible pour une composition contenant un oligomère d'IPDI.

Il existe donc un besoin de fournir des compositions de revêtement polyuréthanne, en particulier aliphatique, présentant un séchage de surface ainsi qu'un séchage à coeur, à température ambiante, qui soit rapide, sans toutefois compromettre les propriétés désirées d'une composition de revêtement, telles que, par exemple, une longue durée de conservation en pot, ou bien encore les propriétés désirées du revêtement réticulé provenant de la composition de revêtement, telles que, par exemple, les propriétés de dureté, de flexibilité et d'impact de surface du revêtement.

Ainsi, un but de la présente invention est de fournir une composition polyisocyanate, éventuellement masquée, de viscosité réduite possédant une fonctionnalité élevée d'au moins 3, de préférence supérieure à 3, dans le cas où elle est obtenue par polycondensation de diisocyanates et une fonctionnalité plus élevée encore dans le cas de triisocyanates.

Un autre but de la présente invention est de fournir une composition polyisocyanate, éventuellement masquée, de viscosité réduite possédant une teneur réduite en polyisocyanates mono-urétidinedione, celle-ci étant avantageusement inférieure à 5 % en poids, par rapport au poids des isocyanates de la composition polyisocyanate.

Un autre but encore de la présente invention est de fournir une composition polyisocyanate éventuellement masquée de viscosité réduite possédant une teneur réduite en polyisocyanates comprenant des groupes isocyanurates, notamment de composés mono-isocyanurates, celle-ci étant avantageusement non supérieure à 45 %, de préférence non supérieure à 40 % en poids, par rapport au poids des isocyanates de la composition polyisocyanate.

Un autre but encore consiste à fournir une composition de revêtement polyuréthanne à séchage rapide à température ambiante.

Ces buts sont atteints grâce à la présente invention qui a pour objet une composition polyisocyanate ayant une fonctionnalité moyenne supérieure à 3, avantageusement supérieure à 3,5, de préférence supérieure à 4, obtenue par polycondensation de monomères diisocyanates
ou triisocyanates, comportant :
(a) de 0 à 5 % en masse par rapport à la masse totale des composants a), b) et c) de composés porteurs d'une seule fonction urétidinedione ayant une masse moléculaire au plus égale à deux fois la masse moléculaire moyenne des monomères isocyanates ayant la masse moléculaire la plus élevée ;
(b) de 0 à 45 % en masse par rapport à la masse totale des composants a), b) et c) de composés porteurs d'une seule fonction isocyanurate et de masse moléculaire au plus égale à trois fois la masse moléculaire moyenne des monomères isocyanates ayant la masse moléculaire la plus élevée ;
   le rapport molaire de (a)/(b) étant inférieur à 20/80 et supérieur à 2/98,
(c) au moins 40 % en masse par rapport à la masse totale des composants a), b) et c) d'un mélange de composés polyisocyanates présentant une masse moléculaire au moins égale à trois fois la masse moléculaire moyenne des monomères isocyanates ayant la masse moléculaire la plus petite et porteurs d'au moins deux fonctions isocyanates, et
   ledit mélange comportant
   (i) des composés porteurs d'au moins deux fonctions isocyanurates,
   (ii) des composés porteurs d'au moins deux fonctions urétidinediones,
   (iii) des composés porteurs d'au moins une fonction isocyanurate et d'au moins une fonction urétidinedione, présentant une masse moléculaire supérieure à trois fois la masse moléculaire la plus élevée des composés isocyanates monomères ci-dessus,
   ledit mélange présentant un rapport fonctions carbonyles appartenant à un cycle urétidinedione/fonctions carbonyles appartenant à un cycle isocyanurate + fonctions carbonyles appartenant à un cycle urétidinedione au moins égal à 4 % ;
d) de 0 à 25 % en masse par rapport à la masse des composants a), b), c), d) et e) de composés porteurs d'au moins une fonction isocyanate, différents de a), b) et c) ; et
e) de 0 à 10 % en masse par rapport à la masse des composants a), b), c), d) et e) d'impuretés.

Par "viscosité réduite" au sens de la présente invention, on entend que la viscosité est réduite d'au moins 10 %, avantageusement au moins 12 %, de préférence au moins 20 %, par rapport à une composition polyisocyanate connue obtenue par cyclotrimérisation de monomères de départ identiques et présentant la même fonctionnalité.

D'une manière générale, la composition polyisocyanate selon la présente invention présente une viscosité comprise entre environ 1 000 mPa.s et environ 50 000 mPa.s. Dans le cas où le monomère de départ est l'HDI, la viscosité d'une composition selon l'invention est généralement inférieure à 25 000 mPa.s, avantageusement inférieure à 20 000 mPa.s pour un taux de transformation de 37 % des fonctions isocyanates, mesuré par dosage à la dibutylamine.

Le composant a) comprend les "composés mono-urétidinediones" qui sont le produit de condensation de deux molécules isocyanates monomères, également dénommés "dimères vrais" et représente avantageusement de 0,1 à 5 % en masse par rapport à la masse des composants a) + b) + c).

Le composant b) comprend les "composés mono-isocyanurates" qui sont le produit de condensation de trois molécules isocyanates monomères, également dénommés "trimères vrais", et représente de 5 à 40 % en masse par rapport à la masse des composants a) + b) + c).

Le mélange de composés c) comporte avantageusement :
- des composés polyisocyanates présentant deux cycles urétidinediones reliés par une chaîne hydrocarbonée ou plus ;
- des composés polyisocyanates présentant deux cycles isocyanurates reliés par une chaîne hydrocarbonée, ou plus.

Les composés comprenant au moins un cycle urétidinedione et au moins un cycle isocyanurate faisant partie du mélange c) comprennent avantageusement un groupe choisi parmi les formules (I) à (V) suivantes et leurs mélanges, 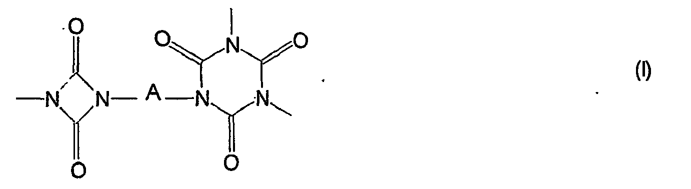 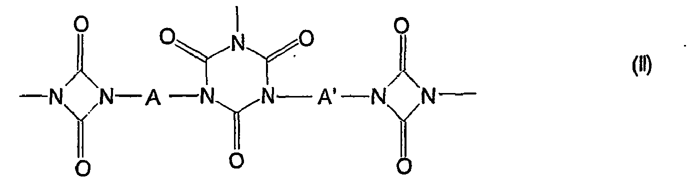 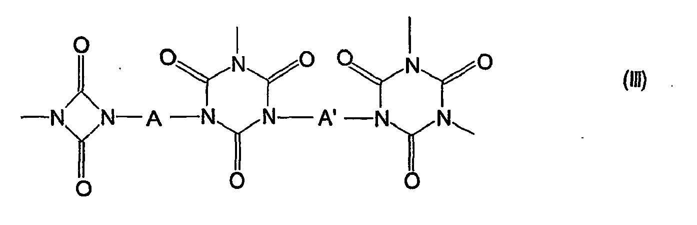 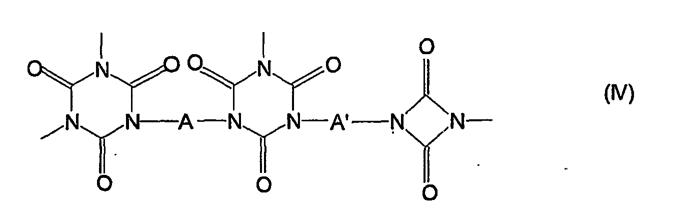 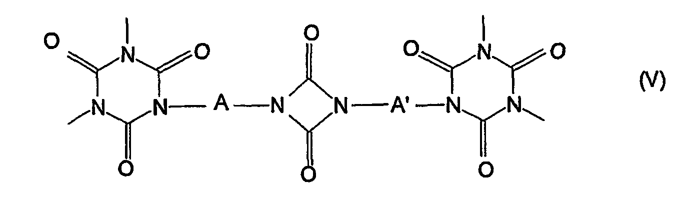 dans lesquels A et A' identiques ou différents représentent les restes d'un composé isocyanate monomère après enlèvement de deux fonctions isocyanates.

Avantageusement, A et A' identiques représentent une chaîne hydrocarbonée divalente comprenant des atomes de carbone et d'hydrogène exclusivement.

On préfère que la composition c) représente au moins 45 % avantageusement au moins 50 % en masse de la masse des composants a) + b) + c).

Selon un mode de réalisation avantageux de l'invention, le composant d) représente au plus 10 % en masse de la masse totale des composants a) + b) + c) + d) + e) et/ou le composant f) représente au plus 5 % en masse de la masse des composants a) + b) + c) + d) + e).

Selon un mode de réalisation avantageux de l'invention, le composant e) représente au plus 5 % en masse par rapport à la masse totale des composants a) + b) + c) + d) + e).

Le composant e) consiste, de manière générale, en résidus de catalyseurs de polycondensation et/ou en produits de polycondensation des monomères isocyanates de départ.

Le composant d) comprend ledit ou lesdits monomères isocyanates de départ qui représentent avantageusement au plus 2 %, de préférence au plus 1 % en masse de la masse totale des composants de la masse totale de a) + b) + c) + d) + e).

La composition d) comprend également des composés isocyanates avantageusement monomères, éventuellement ajoutés après la réaction de polycondensation des monomères diisocyanates, tels que des isocyanates ou triisocyanates de faible poids moléculaire (au plus 500), par exemple un lysine triisocyanate.

L'invention a également pour objet une composition telle que définie précédemment comportant en outre une quantité d'au plus 200 %, avantageusement au plus 100 % de préférence au plus 50 % en masse par rapport aux composants a), b), c), d) et e) d'un solvant organique ou mélange de solvants organiques.

Le solvant ou le mélange de solvants organiques est généralement liquide à température ambiante, ne comporte pas de fonction isocyanate, et ne comporte pas de fonction susceptible de réagir avec la fonction isocyanate, a un point d'ébullition d'au plus 300°C, avantageusement 250°C, de préférence au plus 200°C et est miscible avec les composants a), b), c) et d). Il est également avisé que le point de fusion dudit solvant (par solvant, on entend aussi les mélanges de solvant) soit au plus égal à l'ambiante, avantageusement à 0°C ; dans le cas des mélanges, les points de fusion ne sont pas francs (à l'exception bien entendu des eutectiques) et dans ce cas les valeurs ci-dessus se réfèrent au point de fusion finissante.

L'invention a également pour objet une composition polyisocyanate telle que définie ci-dessus comprenant de 1 à 100 %, avantageusement de 10 à 100 % des groupes NCO présents dans la composition ayant réagi avec un composé à hydrogène mobile. Certains des composés à hydrogène mobile sont appelés « agents masquants » dans la mesure où ils peuvent conduire à la restauration de la fonction isocyanate par un processus thermique ou physico-chimique. En général ces agents masquants restaurent la fonction isocyanate entre 50 et 200°C pendant un temps compris entre 5 minutes et une heure.

De façon préférée, les composés polyisocyanates de la composition de l'invention sont le produit de condensation de deux, trois ou plus de trois molécules isocyanates, porteurs de deux ou trois fonctions isocyanates, désignés dans la présente description par diisocyanates ou triisocyanates monomères.

Il peut s'agir de monomères isocyanates à squelette hydrocarboné exclusivement de nature aliphatique, linéaire, ramifiés ou cycliques ou d'isocyanates aromatiques.

On peut citer en particulier comme monomère aliphatique linéaire l'hexaméthylènediisocyanate (HDI).

On peut citer également les monomères aliphatiques dont le squelette hydrocarboné est ramifié mais dont les fonctions isocyanates sont portées par des atomes de carbone primaire, par exemple le 2-méthylpentane diisocyanate.

On peut encore citer les monomères dont au moins une fonction isocyanate est en position cycloaliphatique, secondaire, tertiaire ou néopentylique.

Il s'agit notamment des monomères dans lesquels la fonction isocyanate est portée par un atome de carbone cycloaliphatique, secondaire, tertiaire ou néopentylique, en particulier les isocyanates cycloaliphatiques. Ces monomères sont tels qu'au moins l'une avantageusement des deux fonctions isocyanates est distante du cycle le plus proche d'au plus un carbone et, de préférence, est reliée directement à lui. En outre, ces monomères cycloaliphatiques présentent avantageusement au moins une, de préférence deux fonctions isocyanates choisies parmi les fonctions isocyanates secondaire, tertiaire ou néopentylique.

On peut citer à titre d'exemple les monomères suivants :
- les composés correspondant à l'hydrogénation du ou des noyaux aromatiques porteurs des fonctions isocyanates de monomères d'isocyanates aromatiques et notamment du TDI (toluènediisocyanate) et des diisocyanato-biphényles, le composé connu sous le sigle H₁₂MDI (4,4' bis-(isocyanatocyclohexyl)méthane), les divers BIC [Bis(isocyanatométhylcyclohexane)] et les cyclohexyldiisocyanates éventuellement substitués ;
   et surtout
- le norbornanediisocyanate, souvent désigné par son sigle NBDI ;
- l'isophoronediisocyanate, ou IPDI, ou plus précisément 3-isocyanatométhyl-3,5,5-triméthylcyclohexylisocyanate.

Comme monomères aromatiques, on peut citer les :
- 2,4- ou 2,6- toluène diisocyanate (TDI) ;
- 2,6-(4,4'-diphénylméthane)diisocyanate (MDI) ;
- 1,5-naphtalène diisocyanate (NDI) ;
- para-phénylène diisocyanate (PPDI).

On préfère les monomères isocyanates aliphatiques y compris cycloaliphatiques, les préférés étant les aliphatiques comportant des enchaînements polyméthylène. Par monomère isocyanate aliphatique, on entend des monomères dont au moins une fonction isocyanate est rattachée à un atome de carbone d'hybridation sp³, avantageusement deux fonctions isocyanates, de préférence toutes les fonctions isocyanates sont rattachées à des atomes de carbone d'hybridation sp³.

Les monomères isocyanates de départ de faible masse moléculaire tels que définis ci-dessus ont généralement une teneur en groupes isocyanates d'au moins 12 %, de préférence au moins 15 %, de préférence au moins 20 %, exprimé en poids de NCO par rapport au poids total d'isocyanate.

Les monomères de départ peuvent également être des produits d'oligomérisation d'isocyanates de faible masse moléculaire tels que définis ci-dessus, ces produits d'oligomérisation étant porteurs de fonctions isocyanates masquées ou non.

Le groupe masquant est la résultante de la réaction d'un composé ayant au moins un atome d'hydrogène réactif avec la fonction isocyanate des polyisocyanates tels que définis ci-dessus.

L'agent masquant, qui peut être un mélange d'agents masquants, est tel que la réaction de masquage puisse s'écrire :

Is-N=C=O + AM-H -------> Is-NH-CO(AM)

où AM-H représente l'agent masquant ;
où AM- représente le groupe masquant ;
où Is est le reste porteur de la fonction isocyanate considérée.

Ledit agent masquant présente au moins une fonction portant un hydrogène mobile, ou plus exactement réactif, fonction pour laquelle on peut définir un pKa lequel correspond, soit à l'ionisation d'un acide, y compris l'hydrogène des fonctions, phénols et alcools, soit à l'acide associé d'une base, en général azotée. Le pKa de la fonction présentant des hydrogènes est au moins égal à 4, avantageusement à 5, de préférence à 6 et est au plus égal à 14, avantageusement à 13, de préférence à 12, et de manière plus préférée à 10, une exception devant être faite pour les lactames dont le pKa est supérieur à ces valeurs et qui constituent des agents masquants néanmoins acceptables bien que non préférés pour l'invention.

Avantageusement, l'agent masquant ne comporte qu'un seul hydrogène mobile.

À titre d'exemples non limitatifs, des agents de masquage selon l'invention, on peut citer les dérivés de l'hydroxylamine tels que l'hydroxysuccinimide et les oximes telles tel que la méthyléthylcétoxime ou le pyruvate oxime, les dérivés des phénols ou assimilés, les dérivés des amides tels les imides et les lactames, ainsi que les malonates ou cétoesters et les hydroxamates.

On peut également citer les groupes hétérocycliques azotés comprenant 2 à 9 atomes de carbone et, outre l'atome d'azote, de 1 à 3 autres hétéroatomes choisis parmi l'azote, l'oxygène et le soufre. Ces groupes sont par exemple choisis parmi les groupes pyrolyle, 2H-pyrrolyle, imidazolyle, pyrimidinyle, pyridazinyle, pyrazinyle, pyrimidinyle, pyridazinyle, indolizinyle, iso-indolyle, indolyle, indozolyle, purinyle, quinolizinyle, isoquinolyle, pyrazolidinyle, imidazolidinyle et triazolyle. On préfère en particulier les hétérocycles comportant de 2 à 4 atomes de carbone et de 1 à 3 atomes d'azote, tels les groupes pyrazolyle, imidazolyle et triazolyle, ces groupes étant éventuellement substitués par un à trois substituants choisis parmi NH₂, NH(alkyle en C₁-C₆), N-(dialkyle en C₁-C₆), OH, SH, CF₃, alkyle en C₁-C₆, cycloalkyle en C₃-C₆, aryle en C₅-C₁₂, notamment phényle, aralkyle en C₆-C₁₈ ayant de 5 à 12 atomes de carbone dans le groupe aryle, notamment benzyle ou alkaryle en C₆-C₁₈ ayant de 5 à 12 atomes de carbone dans le groupe aryle.

Particulièrement préférés sont les groupes 1,2,3-triazolyle ou 1,2,4-triazolyle, ou 3,5-diméthyl-pyrazolyle.

Pour la détermination des pKa, on pourra se reporter à "The determination of ionization constants, a laboratory manual, A. Albert of E.P. Serjeant ; Chapman and Hall Ltd, London".

Pour la liste des agents masquants, on pourra se reporter à Z. Wicks (Prog. Org. Chem., (1975), 3, 73 et Prog. Org. Chem., (1989), 9, 7) et Petersen (Justus Liebigs, Annalen der Chemie, 562, 205, (1949).

Le solvant organique est avantageusement choisi parmi :
- les hydrocarbures aromatiques, notamment le toluène, le xylène, le Solvesso® ;
- les esters, comme l'acétate de n-butyle, l'adipate de diméthyle, le glutarate de méthyle, ou leurs mélanges ;
- les esters éthers comme l'acétate de méthoxypropyle ;
- les éthers comme le butylglycol éther ;
- les cétones, comme la méthyl-isobutyl cétone ;
- les solvants fluorés comme le trifluorométhylbenzène.

La composition polyisocyanate selon l'invention peut être obtenue par un procédé comprenant les étapes suivantes :
i) on prépare un milieu réactionnel de départ comprenant le(s) isocyanate(s) monomère(s) de départ, et éventuellement d'autres monomères réactifs avec la fonction isocyanate ;
ii) on réalise l'étape ii-1) ou bien l'étape ii-2) suivante :
   ii-1) on chauffe le milieu réactionnel de départ en l'absence de catalyseur de dimérisation, à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ; ou bien
   ii-2) on fait réagir le milieu réactionnel de départ en présence d'un catalyseur de dimérisation, éventuellement en chauffant le milieu réactionnel à une température d'au moins 50°C ;
iii) on fait réagir le produit réactionnel de l'étape i) contenant des monomères n'ayant pas réagi avec un catalyseur de (cyclo)trimérisation, dans les conditions de (cyclo)trimérisation ;
iv) on élimine du produit réactionnel de l'étape ii) les monomères de départ n'ayant pas réagi ;
ledit procédé étant **caractérisé en ce que** l'on effectue l'étape ii) jusqu'à un taux de transformation d'au moins 56 % des monomères isocyanates présentes dans le milieu réactionnel initial.

Le taux de monomères résiduel est mesuré par dosage après séparation du mélange polyisocyanate sur une colonne séparative de type chromatographie de filtration sur gel dans un solvant tel que dichlorométhane (CH₂Cl₂) ou tétrahydrofurane (THF). La méthode de détection est l'infrarouge en mesurant la bande NCO à 2 250 cm⁻¹, après étalonnage avec un monomère de concentration connue.

En variante, la composition polyisocyanate selon l'invention peut également être obtenue par un procédé comprenant les étapes suivantes :
i) on prépare un milieu réactionnel de départ comprenant le(s) isocyanate(s) monomère(s) de départ, et éventuellement d'autres monomères réactifs avec la fonction isocyanate ;
ii) on fait réagir les monomères de départ, avec un catalyseur de (cyclo)trimérisation dans les conditions de (cyclo)trimérisation ; -
iii) on réalise l'étape iii-1) ou bien l'étape iii-2) suivante :
   iii-1) on chauffe le produit réactionnel de l'étape i) contenant des isocyanates monomères n'ayant pas réagi, en l'absence de catalyseur de dimérisation, à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ; ou bien
   iii-2) on fait réagir le milieu réactionnel de départ en présence d'un catalyseur de dimérisation, éventuellement en chauffant le milieu réactionnel à une température d'au moins 50°C ;
iv) on élimine du produit réactionnel de l'étape ii) les monomères de départ n'ayant pas réagi ;
ledit procédé étant **caractérisé en ce que** l'on effectue l'étape iii) jusqu'à un taux de transformation d'au moins 56 % des monomères isocyanates présentes dans le milieu réactionnel initial.

Avantageusement, la température de chauffage des étapes ii-1) et iii-1) est d'au moins 80°C, de préférence d'au moins 120°C et d'au plus 170°C.

La durée de chauffage des étapes ii-1) et iii-1) est avantageusement d'au plus 5 heures, et d'au moins 5 minutes, de préférence d'au moins 30 minutes.

La réaction peut être effectuée en l'absence ou en présence d'un solvant. On préfère généralement le réaliser en l'absence de solvant.

Le procédé de invention peut être optimisé en chauffant du mélange réactionnel selon un gradient de température décroissant, afin de déplacer l'équilibre dimères <-> monomères dans le sens de la formation du dimère.

On peut également, conformément au procédé de l'invention, préparer la composition polyisocyanate de manière continue, en soutirant les monomères de départ n'ayant pas réagi et en les recyclant vers l'étape de polycondensation.

Les composés a), b) et c)-selon l'invention peuvent être obtenus à partir d'un seul monomère ou mélange de monomères différents.

La réaction de formation des composés urétidinediones peut être réalisée par voie thermique exclusivement, en l'absence de catalyseur promouvant la formation de cycles urétidinediones. Cette dimérisation thermique en l'absence de catalyseurs spécifiques connus *per se* est un des modes les plus avantageux selon la présente invention. Ces catalyseurs spécifiques sont ceux qui sont connus de l'homme du métier pour donner des urétidinediones à partir de fonctions isocyanates, et ce, avec peu de, ou aucun autre type de condensation (notamment formation d'isocyanurate). Quelques exemples paradigmatiques de tels catalyseurs spécifiques de la dimérisation sont donnés ci après.

Cette formation de cycles urétidinediones est notamment réalisée en l'absence de composés de type trialkylphosphine, tris-(N,N-dialkyl)phosphotriamide, N,N,N',N'-tétra-alkylguanidines, ou imidazole et dérivés d'imidazole.

La réaction de formation des composés urétidinediones peut également être réalisée par voie catalytique exclusivement, en présence de catalyseur favorisant la formation de cycles urétidinediones, et ce, avec peu de, ou aucun autre type de condensation (notamment formation d'isocyanurate). Les catalyseurs spécifiques de dimérisation sont ceux qui sont connus de l'homme du métier pour former- des groupements urétidinediones à partir de fonctions isocyanates et sont choisis parmi les composés de type tris-(N,N-dialkyl)phosphotriamide, N,N-dialkylaminopyridine ou encore de type trialkylphosphine. Un exemple tout particulièrement préféré de catalyseurs de dimérisation pour l'obtention des compositions selon l'invention sont les catalyseurs de type trialkylphosphine.

Selon une variante, il peut être avantageux de chauffer le milieu réactionnel lors de la réaction de formation des composés urétidinediones par voie catalytique. La réaction de dimérisation est alors effectuée par voie catalytique et thermique.

Certains catalyseurs, tels ceux de type tris-(N,N-dialkyl)phosphotriamide et N,N dialkylaminopyridine, conduisent très majoritairement à la formation spécifique de dimères. Lorsque de tels catalyseurs dits de dimérisation sont utilisés, il peut être avantageux d'ajouter un catalyseur de trimérisation de manière à réaliser conjointement les réactions de dimérisation et de trimérisation (étapes ii-2) et iii) ou bien étapes ii) et iii-2)).

En outre, certains catalyseurs permettent à la fois les réactions de dimérisation et de trimérisation. Un exemple de ces catalyseurs est représenté par ceux de type trialkylphosphine. Dans ces conditions, seul ce catalyseur pourra avantageusement être utilisé dans les étapes ii-2) et iii) ou les étapes ii) et iii-2).

Le catalyseur de cyclotrimérisation peut être tout catalyseur connu à cet effet. On peut citer les amines tertiaires telles que la triéthylamine, les bases de Mannich telles que le tris-(N,N-diméthylaminométhyl)phénol, les hydroxydes ou sels d'acides organiques faibles de tétrra-alkylammoniums tels que les tétra-méthyl-, tétra-éthyl- et tétra-butyl-ammoniums, les hydroxydes et sels d'acides organiques faibles d'hydroxy-alkylammoniums tels que le N,N,N-triméthyl-N-hydroxyéthylammonium carboxylate ou le N,N,N-triméthyl-N-hydroxypropylammonium hydroxyde ; les sels de métaux alcalins, alcalino-terreux, d'étain, de zinc ou d'autres métaux d'acides carboxyliques, tels que l'acide acétique propionique, octanoïque, ou benzoïque ou les carbonates de ces métaux ; les alcoolates ou phénates de métaux alcalins, alcalino-terreux, étain, zinc ou autres métaux ; les alkyl phosphines tertiaires telles que décrites dans US 3,211,703, les composés de métaux lourds tels que l'acétylacétonate de fer décrits dans US 3,135,111, les amines silylées et hexaméthyldisilazane décrites dans EP 89297 ; ou les alcoolates de terres rares décrits dans FR 99 16 687.

À l'issue de la réaction de cyclotrimérisation, on désactive le catalyseur de cyclotrimérisation par tout moyen connu, notamment par addition d'un poison de catalyseur ou encore par absorption sur une colonne d'alumine.

Dans le cas où on effectue l'étape de cyclodimérisation thermique et/ou catalytique après la réaction de cyclotrimérisation, il conviendra de s'assurer que le catalyseur de trimérisation est effectivement désactivé.

Lorsque l'on souhaite obtenir une composition polyisocyanate masquée telle que définie ci-dessus, on fait réagir les fonctions isocyanates présentes dans le milieu réactionnel avec l'agent masquant avant, pendant ou après les étapes décrites ci-dessus.

On préfère toutefois réaliser la réaction de masquage après la réaction de polycondensation et après élimination des isocyanates monomères n'ayant pas réagi.

L'un des nombreux intérêts des compositions polyisocyanates selon l'invention est qu'elles peuvent servir de base à la préparation de polymères et/ou de réticulats et être utilisées notamment comme un des constituants principaux de revêtements en tous genres, tels que vernis et peintures. Dans de telles utilisations, les qualités de dureté des polymères réticulables font partie de celles qui sont recherchées sur le plan technique et fonctionnel.

Le procédé de préparation de polymères comporte les étapes suivantes :
- mettre une composition polyisocyanate selon l'invention en présence d'un coréactif qui contient des dérivés présentant des hydrogènes réactifs sous forme d'alcool, de phénol, de thiol, de certaines amines y compris les anilines ; ces dérivés peuvent avoir des squelettes hydrocarbonés aliphatiques, alicycliques ou aromatiques, de préférence alcoyles, y compris cycloalcoyles et aralcoyles, aryles, linéaires ou branchés, substitués ou non (ces coréactifs, en général des polyols sont en eux-mêmes connus) et forment après réaction avec les polyisocyanates un réseau ;
- et chauffer le milieu réactionnel ainsi constitué à une température permettant la réticulation des composants.

Avantageusement, la température est au plus égale à environ 300°C, de préférence au moins égale à 60°C, plus préférentiellement au moins égale à 80°C et de préférence au plus égale à 250°C et plus préférentiellement encore à 200°C et ce, pour une durée inférieure ou égale à 15 heures, de préférence à 10 heures, et plus préférentiellement encore à 8 heures. Il est connu de l'homme de métier que plus la température est élevée moins il faut de temps pour réaliser la réticulation par cuisson. Ainsi une cuisson à 300°C ne nécessite que quelques dizaines de secondes voire quelques minutes, alors que qu'une température de 60°C nécessite un temps qui s'exprime en heures.

On peut prévoir d'inclure un solvant organique dans le milieu réactionnel de réticulation. On peut également prévoir une suspension dans l'eau.

Ce solvant optionnel est, de préférence peu polaire, c'est-à-dire dont la constante diélectrique n'est guère supérieure ou égale à 4 ou plus préférentiellement à 5.

Conformément à l'invention, les solvants peu polaires préférés sont ceux qui sont bien connus de l'homme du métier et en particulier les aromatiques tel que le benzène, les cétones telles que la cyclohexanone, la méthyléthylcétone et l'acétone ; les esters d'alcoyle(s) légers et notamment les esters adipiques ; les coupes pétrolières du type de celles vendues sous la marque Solvesso®.

Généralement, le solvant est identique au solvant de la composition polyisocyanate ci-dessus.

Les dérivés entrant dans la composition du coréactif sont en général di-, oligo-, ou polyfonctionnels, peuvent être monomères ou issus de di-, d'oligo- ou poly-mérisation et sont mis en oeuvre pour la préparation de polyuréthannes éventuellement réticulés, leur choix sera dicté par les fonctionnalités attendues pour le polymère dans l'application finale et par leur réactivité.

Notamment lorsque l'on désire avoir des compositions "bi-composant" (c'est-à-dire contenant simultanément les deux réactifs : la composition polyisocyanate ici au moins partiellement masquée selon l'invention et le composé à hydrogène réactif) stables, on préfère éviter d'utiliser des dérivés présentant des hydrogènes réactifs qui catalysent la libération de l'isocyanate masqué. Ainsi, parmi les amines, on préfère n'utiliser que celles qui ne catalysent pas la décomposition ou la transamidation des fonctions isocyanates masquées selon la présente invention.

Ces coréactifs sont en général bien connus de l'homme de métier.

L'invention concerne donc, également, des compositions de peintures comprenant pour addition successive ou simultanée :
- un polyisocyanate masqué selon l'invention ;
- un coréactif à hydrogène réactif tel que décrit ci-dessus ;
- d'éventuels catalyseurs en eux-mêmes connus (notamment ceux à base d'étain pour les oximes) ;
- éventuellement au moins un pigment, tel que du bioxyde de titane ;
- éventuellement une phase aqueuse ;
- éventuellement un agent tensio-actif pour maintenir en émulsion ou en suspension les composants constitutifs du mélange ;
- éventuellement un solvant organique ;
- éventuellement un déshydratant.

Les catalyseurs sont avantageusement latents, notamment ceux qui ont fait l'objet de brevet et de demande de brevet publié au nom de la demanderesse ou de ses prédécesseurs en droit (société comportant dans son nom « Rhône-Poulenc »).

L'invention concerne aussi les peintures et vernis obtenues par l'utilisation de ces compositions, selon le procédé ci-dessus.

Ainsi, et selon un autre aspect de la présente invention, celle-ci concerne une composition de revêtement réactive comprenant :
- une composition polyisocyanate ayant une fonctionnalité moyenne supérieure à 3 et une viscosité comprise entre environ 1 000 mPa.s et environ 50 000 mPa.s. ; et
- un composé polyol ayant un nombre d'hydroxyle compris entre environ 50 et environ 250 et une masse molaire comprise entre environ 500 et environ 15 000.

Plus précisément, la composition de revêtement réactive comprend :
(I) une composition polyisocyanate obtenue par polycondensation de monomères diisocyanates ou triisocyanates, comportant :
   a) de 0 à 5 % en masse par rapport à la masse totale des composants a), b) et c) de composés porteurs d'une seule fonction urétidinedione ayant une masse moléculaire au plus égale à deux fois la masse moléculaire moyenne des monomères isocyanates ayant la masse moléculaire la plus élevée ;
   (b) de 0 à 45 % en masse par rapport à la masse totale des composants a), b) et c) de composés porteurs d'une seule fonction isocyanurate et de masse moléculaire au plus égale à trois fois la masse moléculaire moyenne des monomères isocyanates ayant la masse moléculaire la plus élevée ; le rapport molaire de (a) / (b) étant inférieur à 20 / 80 et supérieur à 2/98,
   (c) au moins 40 % en masse par rapport à la masse totale des composants a), b) et c) d'un mélange de composés polyisocyanates présentant une masse moléculaire au moins égale à trois fois la masse moléculaire moyenne des monomères isocyanates ayant la masse moléculaire la plus petite et porteurs d'au moins deux fonctions isocyanates, et ledit mélange comportant : (i) des composés porteurs d'au moins deux fonctions isocyanurates, (ii) des composés porteurs d'au moins deux fonctions urétidinediones, (iii) des composés porteurs d'au moins une fonction isocyanurate et d'au moins une fonction urétidinedione, présentant une masse moléculaire supérieure à trois fois la masse moléculaire la plus élevée des composés isocyanates monomères ci-dessus,
      ledit mélange présentant un rapport fonctions carbonyles appartenant à un cycle urétidinedione/fonctions carbonyles appartenant à un cycle isocyanurate + fonctions carbonyles appartenant à un cycle urétidinedione au moins égal à 4 % ;
   (d) de 0 à 25 % en masse par rapport à la masse des composants a), b), c), d) et e) de composés porteurs d'au moins une fonction isocyanate, différents de a), b) et c) ; et
   (e) de 0 à 10 % en masse par rapport à la masse des composants a), b), c), d) et e) d'impuretés ; et
**(II)** un composé polyol ayant un nombre d'hydroxyle compris entre environ 50 et environ 250 et une masse molaire comprise entre environ 500 et environ 15 000.

Selon un autre aspect, la présente invention concerne une composition de revêtement réactive comprenant :
**(I)** une composition polyisocyanate obtenue par un procédé comprenant les étapes suivantes :
   A.i) préparation d'un milieu réactionnel de départ comprenant le(s) isocyanate(s) monomère(s) de départ, et éventuellement d'autres monomères réactifs avec la fonction isocyanate ;
   A.ii) réalisation de l'étape A.ii-1) ou bien de l'étape A.ii-2) suivante :
      A.ii-1) chauffage du milieu réactionnel de départ en l'absence de catalyseur de dimérisation, à une température d'au moins 50°C, avantageusement d'au moins 80°C, de préférence d'au moins -120°C, et d'au plus 200°C, avantageusement d'au plus 170°C, pendant une durée inférieure à 24 heures, avantageusement inférieure à 5 heures ; ou bien
      A.ii-2) réaction du milieu réactionnel de départ en présence d'un catalyseur de dimérisation, éventuellement en chauffant le milieu réactionnel à une température d'au moins 50°C ;
   A.iii) réaction du produit réactionnel de l'étape i) contenant des monomères n'ayant pas réagi avec un catalyseur de (cyclo)trimérisation, dans les conditions de (cyclo)trimérisation ;
   A.iv) élimination, du produit réactionnel de l'étape A.ii), des monomères de départ n'ayant pas réagi ;
      ledit procédé étant **caractérisé en ce que** l'on effectue l'étape A.ii) jusqu'à un taux de transformation d'au moins 56 % des monomères isocyanates présentes dans le milieu réactionnel initial ;
      ou bien selon une alternative par un procédé comprenant les étapes suivantes :
      B.i) préparation d'un milieu réactionnel de départ comprenant le(s) isocyanate(s) monomère(s) de départ, et éventuellement d'autres monomères réactifs avec la fonction isocyanate ;
      B.ii) réaction des monomères de départ, avec un catalyseur de (cyclo)trimérisation dans les conditions de (cyclo)trimérisation ;
      B.iii) réalisation de l'étape B.iii-1) ou bien de l'étape B.iii-2) suivante :
         B.iii-1) chauffage du produit réactionnel de l'étape B.i) contenant des isocyanates monomères n'ayant pas réagi, en l'absence de catalyseur de dimérisation, à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ; ou bien
         B.iii-2) réaction du milieu réactionnel de départ en présence d'un catalyseur de dimérisation, éventuellement en chauffant le milieu réactionnel à une température d'au moins 50°C ;
      B.iv) élimination, du produit réactionnel de l'étape B.ii), des monomères de départ n'ayant pas réagi ;
      ledit procédé étant **caractérisé en ce que** l'on effectue l'étape B.iii) jusqu'à un taux de transformation d'au moins 56 % des monomères isocyanates présentes dans le milieu réactionnel initial ;
**(II)** un composé polyol ayant un nombre d'hydroxyle compris entre environ 50 et environ 250 et une masse molaire comprise entre environ 500 et environ 15 000.

La présente invention concerne également un procédé de fabrication d'un article, comprenant l'application d'une couche de composition de revêtement définie ci-dessus sur au moins une partie d'au moins une surface d'un substrat, et la réticulation ("cuisson") de la couche de composition de revêtement sur le dit substrat.

La présente invention concerne ainsi un procédé de revêtement comprenant la réaction de réticulation de la composition de revêtement décrite précédemment.

La présente invention concerne également un article comprenant un substrat possédant une surface et une couche de revêtement supportée sur au moins une partie de la surface, la dite couche de revêtement comprenant le produit de la réaction de réticulation de la composition de revêtement décrite ci-dessus.

La composition de revêtement de la présente invention présente un séchage rapide de surface et un séchage rapide à coeur, à température ambiante, ainsi qu'une bonne durée de conservation en pot, et les réticulats des compositions de revêtement de la présente invention présentent de bonnes propriétés de dureté, de flexibilité et d'impact de surface.

Selon un aspect préféré, les composants polyisocyanate oligomère et polyol de la composition de revêtement de la présente invention sont présents dans des proportions efficaces pour fournir de 0,9 à 2,0, de préférence de 0,95 à 1,5, de préférence encore d'environ 1,0 à 1,1 équivalents de groupes isocyanates par équivalent de groupes hydroxyle.

Dans la présente description, le terme "nombre d'hydroxyle" signifie la quantité de groupements hydroxyle par unité de masse d'échantillon et est exprimé en milligrammes d'hydroxyde de potassium (KOH) par gramme d'échantillon (mg KOH/g). Selon un aspect préféré, le polyol possède un nombre d'hydroxyle compris entre environ 50 et environ 200, de préférence entre environ 100 et environ 175.

La masse molaire moyenne du polyol est mesurée par chromatographie par perméation de gel, en utilisant le polystyrène comme standard. Selon un aspect préféré, le polyol a une masse molaire comprise entre environ 500 et environ 8 000. -

Des polyols convenables sont connus dans le domaine et comprennent, par exemple, les polyéther-polyols, les polyester-polyols, les polyacrylate-polyols et leurs mélanges. Parmi les polyester-polyols, on peut citer par exemple les produits d'éthoxylation ou de propoxylation de l'eau ou de diols.

Des polyester-polyols convenables sont, par exemple, préparés, selon une réaction de polycondensation connue, à partir d'un ou plusieurs acides ou de leurs anhydrides correspondants avec un ou plusieurs alcools polyhydriques. Parmi les acides convenables, on peut citer à titre d'exemple l'acide benzoïque, l'acide maléique, l'acide adipique, l'acide phtalique, l'acide isophtalique, l'acide téréphtalique et l'acide sébacique, ainsi que leurs anhydrides correspondants, de même que les acides gras dimériques les acides gras trimériques et les courts en huile. Les alcools convenables comprennent, par exemple, l'éthylène glycol, le 1,4-butanediol, le 1,6-hexane diol, le néopentylglycol, le tétraéthylène glycol, les polycarbonate-diols, le triméthylolpropane et le glycérol.

Selon un aspect tout particulièrement préféré, le polyol comprend un polyol polyacrylate. Les polyols acryliques convenables sont préparés, par exemple, selon des réactions de copolymérisation connues de un ou plusieurs monomères hydroxyalkyl(méth)acrylate, tels que, par exemple, les hydroxy(C₁-C₈)alkyl(méth)acrylates, avec un ou plusieurs monomères acrylate, tels que, par exemple, les (C₁-C₁₀)alkylacrylates et les Cyclo(C₆-C₁₂)alkyl acrylates, ou avec un ou plusieurs monomères méthacrylate, tels que, par exemple, les (C₁-C₁₀)alkyl méthacrylates, et les cyclo(C₆-C₁₂)alkyl méthacrylates, ou bien encore avec un ou plusieurs monomères vinyliques, tels que, par exemple, le styrène, l'a-méthylstyrène, l'acétate de vinyle, le versatate de vinyle, ou avec un mélange de deux ou plusieurs de ces monomères. Les polyols polyacrylates comprennent, par exemple, les copolymères hydroxy(C₂-C₈)alkyl(méth)acrylate-co-(C₂-C₈)alkyl-(méth)acrylate.

La composition de revêtement de la présente invention peut éventuellement comprendre en outre un ou plusieurs solvants. De tels solvants peuvent être ajoutés à la composition de manière séparée ou bien peuvent être ajoutés à la composition sous forme de mélange avec l'oligomère polyisocyanate, le polyol ou bien encore avec à la fois l'oligomère polyisocyanate et le polyol. Des solvants convenables comprennent les solvants aromatiques, tels que, par exemple, le xylène, le toluène et les solvants aliphatiques, tels que, par exemple, l'acétate de t-butyle, l'acétone, ainsi que des mélanges de ces solvants , tels que, par exemple, l'Aromatic® 100 (un mélange de solvants aromatiques, commercialisé par ExxonMobil).

Selon un aspect préféré, la composition de revêtement de la présente invention comprend une quantité de solvant suffisant pour fournir une composition de revêtement ayant une viscosité, mesurée par la capsule de Zahn n° 3, d'environ 5 à 40 secondes, de préférence de 6 à 30 secondes, de préférence encore de 7 à 25 secondes. Toujours selon un aspect préféré, la composition de la présente invention présente une teneur en solides comprise entre environ 30 et environ 60 % en masse, de préférence entre environ 35 et environ 85 % en masse, et de préférence encore entre environ 40 et 75 % en masse. Selon un aspect tout particulièrement préféré, la composition de revêtement de la présente invention présente un contenu en matières organiques volatiles (Volatile Organic Content, VOC) inférieur à environ 5 livres par gallon ("Ibs/gal"), de préférence inférieur à environ 4,0 Ibs/gal, de préférence encore inférieur à 3,5 Ibs/gal.

La composition de revêtement de la présente invention peut éventuellement comprendre un ou plusieurs diluants réactifs, tels que, par exemple, des oxazolidines, des cétimines, des aldimines, des (méth)acrylates, tels que, par exemple, le méthacrylate d'isobornyle, dans une quantité allant jusqu'à environ 5 parties en poids de diluant réactif pour 100 parties en poids de la composition. Selon un aspect préféré, la composition de revêtement de la présente invention comprend de plus un composé catalytique pour réaliser une réticulation catalytique des composants polyisocyanate et polyol de la composition de revêtement. Les catalyseurs convenables comprennent, par exemple, les catalyseurs amine, tels que, par exemple, la N,N-diméthyléthanolamine, le diazabicyclo[2.2.2] octane, la triéthylène amine, la N,N-diméthylcyclohexylamine, les composés organo-étain, tels que, par exemple, l'acétate d'étain (II), l'octanoate d'étain (II), l'éthylhexanoate d'étain (II), le laurate d'étain (II), l'oxyde de dibutylétain, le dichlorure de dibutylétain, le dichlorure de diméthylétain, le diacétate de dibutylétain, le diacétate de diméthylétain, le dilaurate de dibutylétain, le dilaurate de diméthylétain, le maléate de dibutylétain, le maléate de diméthylétain, le diacétate de dioctylétain, le dilaurate de dioctylétain, le dilaurylmercaptant de dibutylétain et le dilaurylmercaptant de diméthylétain, les composés organo-cobalt, tels que le naphtanate de cobalt, les composés organo-calciques, tels le naphtanate de calcium, et les composés organo-césium, tels que le naphtanate de césium, ainsi que le mélanges de ces catalyseurs.

Selon un aspect préféré, le catalyseur comprend un sel d'organo-étain (IV), de préférence le dilaurate de dibutylétain. Les catalyseurs à base d'étain sont habituellement utilisés dans des quantités comprises entre 0,001 et 1,0 partie en poids, de préférence entre 0,005 et 0,5 parties en poids de composé catalytique sel organo-étain pour 100 parties en poids de composition de revêtement. Le catalyseur à base d'étain peut être ajout soit au composant polyisocyanate soit au composant, polyol, mais il est de préférence ajouté au composant polyol.

Selon un aspect encore préféré, la composition de la présente invention comprend en outre un agent d'allongement de durée de vie en pot qui retarde la réticulation de la masse de composition de revêtement, c'est-à-dire, avant l'application de la composition de revêtement sur un substrat, mais qui est suffisamment volatile pour s'évaporer à température ambiante à partir d'un film de composition de revêtement. De tels agents d'allongement de durée de vie en pot comprennent, par exemple, des acides, des cétones et des mélanges de ceux-ci. Selon un aspect particulièrement préféré, l'agent d'allongement de la durée de vie en pot est choisi parmi un acide (C₁-C₅) carboxylique, de préférence l'acide acétique ou l'acide formique, une dione, de préférence la 2,4-pentanedione, ou un mélange de ceux-ci. Sous un aspect préféré, la composition comprend une quantité d'agent d'allongement de la durée de vie en pot suffisante pour donner une durée de vie en pot, définie comme le temps nécessaire pour doubler la viscosité telle que mesurée par la capsule de Zahn n° 3, ou encore de 1 à 10 heures. Selon un aspect préféré, la composition de revêtement comprend, basé sur 100 parties en poids de composition de revêtement, de 0,05 à 5 parties en poids d'agent d'allongement de durée de vie en pot, de préférence encore, de 0,5 à 2 parties en poids d'agent d'allongement de durée de vie en pot. De préférence, l'agent d'allongement de durée de vie en pot est mélangé au catalyseur avant l'ajout du dit catalyseur au polyol ou au polyisocyanate.

La composition de la présente invention peut éventuellement comprendre également des quantités mineures d'additifs connus dans le domaine technique des revêtements, tels que, par exemple, des agents d'écoulement, des agents de rhéologie, des tensioactifs et des pigments. Selon un aspect préféré, la composition de revêtement de la présente invention est un revêtement clair, c'est-à-dire non-pigmenté. La composition de la présente invention est réalisée en combinant les composants dans les quantités relatives décrites ci-dessus et en mélangeant les composants de manière à obtenir un mélange substantiellement homogène.

La composition de la présente invention est appliquée à un substrat, qui peut être tout matériau solide, de préférence un substrat métallique, selon des techniques connues d'application, telles que, par exemple, par pulvérisation, à l'aide d'un applicateur, ou au rouleau.

Selon un aspect préféré, la composition de revêtement réticule d'elle-même à une température comprise entre 10 et 50°C, de préférence encore entre 20 et 30°C, de façon encore plus préférentielle à température ambiante, c'est-à-dire à environ 22 ± 5°C. De préférence, la composition de revêtement réticule d'elle-même dans un environnement ayant une humidité relative de 50 ± 10%. Selon un aspect préféré, la composition de revêtement durcit également d'elle-même pendant une période plus grande que ou égale à deux semaines à une température d'environ 22 ± 5°C et sous une humidité relative d'environ 50 ± 10 %.

Selon un aspect préféré, la composition de revêtement catalysée présente une durée de vie en pot supérieure ou égale à une heure, de préférence encore supérieure ou égale à 1,5 heures, un durée de séchage au toucher inférieure ou égale à 1,5 heures, de préférence inférieure ou égale à 1 heure et une durée de séchage à coeur inférieure ou égale à 1,5 heures, de préférence encore inférieure ou égale à 1 heure, chacune de ces durées valant pour une température de 22 ± 5°C et une humidité relative de 50 ± 10%. Selon un aspect préféré, le revêtement, lorsqu'il est réticulé et durci, présente une résistance à l'impact supérieure ou égale à 160 pouces livres et une dureté aux crayons supérieure ou égale à "F".

Les compositions de revêtement de la présente invention sont notamment utiles pour la fabrication d'articles revêtus, tels que les panneaux de carrosserie des véhicules automobiles.

Les exemples ci-après illustrent l'invention.

### Abréviations utilisées :

HMDZ : hexaméthyldisilazane
HDI : hexaméthylenediisocyanate
AcO n butyle : Acétate de n butyle
Fonction NCO : Fonction NCO
MEKO : Butanone ou Méthyléthylcétoxime
DMP : 3,5 Diméthylpyrazole
poly NCO : Polyisocyanate
Di : Dimères
Tri : Trimères

Les quantités des différents composants présentés dans la présente description, exemples et revendications sont exprimées en pourcentage en masse, sauf indication contraire.

Les termes « Bis-trimères », « trimères-dimères » et « bis-trimères » correspondent aux oligomères ayant une masse moléculaire de 3 à 6 fois celle des monomères.

Les « lourds » correspondent aux oligomères ayant une masse moléculaire égale ou supérieure à 7 fois celle des monomères.

### Exemple 1 :

### Préparation d'une composition polyisocyanate à partir d'HDI

Dans un réacteur de 2000 mL, muni d'un réfrigérant et chauffé par un bain d'huile, on introduit sous agitation 1000 g d'HDI (soit 5,95 mole). On porte le milieu réactionnel à 120°C. On ajoute ensuite 24 g d'hexaméthyldisilazane (HMDZ ; soit 0,15 mole, soit 2,4% en poids par rapport au diisocyanate : catalyseur de trimérisation). Le milieu réactionnel est chauffé pendant 30 minutes à 120°C puis 3,5 heures à 150°C, puis refroidi à 80°C, température à laquelle 11 g de n-butanol (bloqueur du catalyseur) sont ajoutés. Le mélange réactionnel est maintenu à 80°C pendant 1 heure. Le taux de transformation des fonctions NCO (mesuré par dosage de la dibutylamine) est de 30,5%, puis est purifié par distillation du monomère sous vide à l'aide d'un appareil à distiller à couche mince. On récupère, après distillation, 507 g de composition polyisocyanate (rendement récupéré : 49%) qui présente les caractéristiques suivantes :
Titre NCO : 0,480 mole de fonction NCO pour 100 g de matière à 100% d'extrait sec, soit 20,16% en poids de NCO pour 100 g de matière à 100% d'extrait sec.
Viscosité à 25°C : 7250 cps pour un extrait sec de 100%.
Viscosité à 25°C : 2420 cps pour un extrait sec de 95% (solvant AcO n butyle).
Viscosité à 25°C : 1082 cps pour un extrait sec de 90% (solvant AcO n butyle).
Fonctionnalité : 4,25

La répartition polymérique de la composition avant et après distillation du monomère est la suivante :

| ***Produit* / *Élément*** | ***avant distillation du monomère HDI (en %)*** | ***après distillation du monomère HDI (en %)*** |
|---|---|---|
| HDI résiduel | 43 | 0,34 |
| Taux de transformation de l'HDI avant distillation | 57 | |
| Monocarbamate de butyle | 1,5 | 0,4 |
| Dimère vrai | 1,8 | 2,9 |
| Trimère vrai( un seul cycle isocyanurate) | 19,5 | 35,5 |
| Bis-trimère + trimère-dimère | 12,7 | 24,1 |
| Lourds comportant des cycles isocyanurate et dimère | 19,0 | 36,9 |

Les compositions se caractérisent par les ratios dimère/isocyanurate suivants calculés sur les absorbances des fonctions carbonyles des fonctions dimère et isocyanurate obtenus à partir des spectres Infra rouge des oligomères.

| | Fonctions CO dimère | Fonctions CO isocyanurate | Ratio Carbonyle Di global / Tri global | Ratio Carbonyle dimère des lourds / Di global en % | Ratio Carbonyle Trimère des lourds / Tri global en % |
|---|---|---|---|---|---|
| Répartition globale | 6 % | 94 % | 6,4 | 35 | 48 |
| Oligomères vrais | 2,7 % | 29,2% | | | |
| Oligomères bis | 1,2 % | 19,8 % | | | |
| Oligomères lourds | 2,1% | 45 % | | | |

Le ratio molaire Dimère vrai / Isocyanurate vrai est de 11/89 soit 12%.

### Exemple 2 :

### Préparation d'une composition polyisocyanate à partir d'HDI

On procède comme pour l'exemple 1 sur 1603 g de HDI avec 2,6% en poids de HMDZ, et un temps de réaction de 5 heures 10 à 150°C.

Le taux de transformation des fonctions NCO (mesuré par dosage de la dibutylamine) est de 37 %. Le milieu réactionnel est purifié par distillation du monomère sous vide à l'aide d'un appareil à distiller à couche mince. On récupère, après distillation, 944 g de composition polyisocyanate (rendement récupéré : 58%) qui présente les caractéristiques suivantes :
Titre NCO : 0,446 mole de fonction NCO pour 100 g de matière à 100% d'extrait sec soit 18,73 % en poids de NCO pour 100 g de matière à 100% d'extrait sec.
Viscosité à 25°C : 17220 cps pour un extrait sec de 100%.
Viscosité à 25°C : 1940 cps pour un extrait sec de 90% (solvant AcO n butyle).
Fonctionnalité : 4,6
La répartition polymérique de la composition avant et après distillation du monomère est la suivante :

| ***Produit* / *Elément*** | ***avant distillation du monomère HDI (en %)*** | ***après distillation du monomère HDI (en %)*** |
|---|---|---|
| HDI résiduel | 38 | 0,26 |
| Taux de transformation de FHDI avant distillation | 62 | |
| Monocarbamate de butyle | 1,5 | 0,4 |
| Dimère vrai | 1,3 | 2,1 |
| Trimère vrai (un seul cycle isocyanurate) | 18,8 | 30,3 |
| Bis-trimère + trimère-dimère | 13,9 | 22,7 |
| Lourds comportant des cycles isocyanurate et dimère | 26,7 | 44,24 |

Le ratio molaire Dimère vrai/Isocyanurate vrai est de 10/90 soit 11%.

### Exemple comparatif 1 :

Polyisocyanate oligomère d'hexaméthylène diisocyanate ("HDT"), autrement dit le trimère HDT. Cet oligomère présente les caractéristiques suivantes :
Teneur en NCO (% en poids) : 22.0
Fonctionnalité : 3.8
Température de transition vitreuse : -63 °C
Masse molaire moyenne (en nombre) : 818
Viscosité à 23°C : 2900 mPa.s.

### Exemple comparatif 2 :

La composition de cet exemple est un mélange de 60 parties en poids d'oligomère HDT et de 40 parties en poids d'isophorone diisocyanate ("IPDT") (à 70% en poids dans l'acétate de butyle).

### Exemple 3 :

### Préparation d'une composition polyisocyanate à partir d'HDI

On procède comme pour l'exemple 1 sur 5000 g de HDI avec 2,4% en poids de HMDZ, et un temps de réaction de 3,5 heures à 150°C. Le taux de transformation des fonctions NCO (mesuré par dosage de la dibutylamine ) est de 38 %. On répète l'opération une deuxième fois.

Les mélanges réactionnels sont rassemblés et purifiés par distillation du monomère sous vide à l'aide d'un appareil à distiller à couche mince. On récupère après distillation 5866 g de composition polyisocyanate (rendement récupéré : 58%) qui présente les caractéristiques suivantes :
Titre NCO : 0,458 mole de fonction NCO pour 100 g de matière à 100% d'extrait sec soit 19,2% en poids de NCO pour 100 g de matière à 100% d'extrait sec.
Viscosité à 25°C : 12654 cps pour un extrait sec de 100%.
Densité : 1,165.
Fonctionnalité : 4,7.

La répartition polymérique de la composition avant et après distillation du monomère est la suivante :

| ***Produit* / *Elément*** | ***avant distillation du monomère HDI (en %)*** | ***après distillation du monomère HDI (en %)*** |
|---|---|---|
| HDI résiduel | 36,5 | 0,5 |
| Taux de transformation de l'HDI avant distillation | 63,5 | |
| Monocarbamate de butyle | 1,3 | 0,7 |
| Dimère vrai | 1,2 | 1,8 |
| Trimère vrai (un seul cycle isocyanurate) | 19 | 30 |
| Bis-trimère + trimère-dimère | 13 | 20 |
| Lourds comportant des cycles isocyanurate et dimère | 29 | 47 |

Les compositions se caractérisent par les ratios dimère/isocyanurate suivants calculés sur les absorbances des fonctions carbonyles des fonctions dimère et isocyanurate obtenus à partir des spectres Infra rouge des oligomères.

| | Fonctions CO dimère | Fonctions CO isocyanurate | Ratio Carbonyle Di global / Tri global | Ratio Carbonyle dimère des lourds / Di global en % | Ratio Carbonyle Trimère des lourds / Tri global en % |
|---|---|---|---|---|---|
| Répartition globale | 4,1% | 95,9% | 4,3 | 41,5 | 55 |
| Oligomères vrais | 1,6% | 24,8 % | | | |
| Oligomères bis | 0,8 % | 18,9 % | | | |
| Oligomères lourds | 1,7 % | 52% | | | |

Le ratio molaire Dimère vrai / Isocyanurate vrai est de 8/92 soit 9 %.

### Exemple 4 :

### Préparation d'une composition polyisocyanate à partir d'HDI

On procède comme pour l'exemple 3 sur 5062 g de HDI avec 1,7% en poids de HMDZ, et un temps de réaction de 3,5 heures à 150°C. Le taux de transformation des fonctions NCO (mesuré par dosage de la dibutylamine) est de 35%. On répète l'opération une deuxième fois sur 5257 g de HDI.
Les mélanges réactionnels sont rassemblés et purifiés par distillation du monomère sous vide à l'aide d'un appareil à distiller à couche mince. On récupère après distillation 5090 g de composition polyisocyanate (rendement récupéré : 49%) qui présente les caractéristiques suivantes :
Titre NCO : 0,491 mole de fonction NCO pour 100 g de matière à 100% d'extrait sec soit 20,6% en poids de NCO pour 100 g de matière à 100% d'extrait sec.
Viscosité à 25°C : 5420 cps pour un extrait sec de 100%
Densité : 1,165
Fonctionnalité : 4,1

La répartition polymérique de la composition avant et après distillation du monomère est la suivante :

| ***Produit* / *Elément*** | ***avant distillation du monomère HDI (en %)*** | ***après distillation du monomère HDI (en %)*** |
|---|---|---|
| HDI résiduel | 46,5 | 0,2 |
| Taux de transformation de l'HDI avant distillation | 53,5 | |
| Monocarbamate de butyle | 1,0 | 0,2 |
| Dimère vrai | 2 | 3,5 |
| Trimère vrai (un seul cycle isocyanurate) | 21,9 | 40,2 |
| Bis-trimère + trimère-dimère | 12,7 | 23,8 |
| Lourds comportant des cycles isocyanurate et dimère | 15,9 | 32,1 |

Les compositions se caractérisent par les ratios dimère/isocyanurate suivants calculés sur les absorbances des fonctions carbonyles des fonctions dimère et isocyanurate obtenus à partir des spectres Infra rouge des oligomères.

| | Fonctions CO dimère | Fonctions CO isocyanurate | Ratio Carbonyle Di global / tri global | Ratio Carbonyle dimère des lourds / Di global en % | Ratio Carbonyle Trimère des lourds / Tri global en % |
|---|---|---|---|---|---|
| Répartition globale | 5,8 % | 94,2% | 6,15 | 31 | 39 |
| Oligomères vrais | 2,7% | 34,6% | | | |
| Oligomères bis | 1,3% | 23,2 % | | | |
| Oligomères lourds | 1,8% | 36,4% | | | |

Le ratio molaire Dimère vrai / Isocyanurate vrai est de 12/88 soit 14%.

### Exemples comparatifs 5 à 7

À titre d'exemples comparatifs nous avons fait l'analyse de différents polyisocyanates commerciaux obtenus selon des procédés classiques de trimérisation par HMDZ mais avec des taux de transformation faible.

| Nature du polyisocyanate | Taux de transformation de HDI | Viscosité en mPa.s à 25°C | Ratio molaire di vrai / Tri vrai en % | Ratio Carbonyle Di global / tri global | Ratio Carbonyle dimère des lourds / Di global en % | Ratio Carbonyle Trimère des lourds / Tri global en % |
|---|---|---|---|---|---|---|
| TOLONATE HDT-LV2 * | 25 % | 700 | 38 | 21 | 11,5 | 17 |
| TOLONATE HDT-LV * | 20% | 1200 | 8,5 | 6 | 18 | 13 |
| TOLONATE HDT * | 33 % | 2400 | 4 | 4 ,2 | 28 | 20 |

| | | | | | | |
|---|---|---|---|---|---|---|
| * commercialisé par RHODIA | | | | | | |

### Exemple 8 :

On procède comme pour l'exemple 1 sauf que l'on travaille sur 509 g de HDI avec 12,7 g de HMDZ (2,5% en poids par rapport à l'HDI) et que le temps de réaction à 150°C est de 5,5 heures.

Après blocage de la réaction au n-butanol à 80°C, le taux de transformation des fonctions NCO est de 41 %.

Après distillation du monomère résiduel sous vide, on récupère 315 g de produit soit un rendement récupéré de 60% dont les caractéristiques sont présentées ci après.
Vïscosité : 44 857 cps à 25°C.
Titre NCO : 0,430 mole de NCO pour 100 g de produit soit 18% en poids.
Fonctionnalité : 5,3

| ***Produit* / *Elément*** | ***avant distillation du monomère HDI (en %)*** | ***après distillation du monomère HDI (en %)*** |
|---|---|---|
| HDI résiduel | 31,8 | 0,1 |
| Taux de transformation de l'HDI avant distillation | 68,2% | |
| Monocarbamate de butyle | 1,6 | |
| Dimère vrai | 1,2 | 1 |
| Trimère vrai (un seul cycle isocyanurate) | 16,9 | 23,6 |
| Bis-trimère + trimère-dimère | 12 | 18 |
| Lourds comportant des cycles isocyanurate et dimère | 36,5 | 57,3 |

Le ratio molaire Dimère vrai / Isocyanurate vrai est de 6,4%.

### Exemple 9 :

On procède comme pour l'exemple 8 sauf que l'on travaille sur 505 g de HDI avec 12,7 g de HMDZ (2,5% en poids par rapport à l'HDI) pendant 5,25 heures à 140°C.

Après blocage de la réaction au n-butanol à 80°C, le taux de transformation des fonctions NCO est de 43 %.

Après distillation du monomère résiduel sous vide, on récupère 323 g de produit, soit un rendement récupéré de 62 % dont les caractéristiques sont présentées ci après.
Viscosité : 65 940 cps à 25°C
Titre NCO : 0,405 mole de NCO pour 100 g de produit soit 17% en poids.
Fonctionnalité : 5,6

| ***Produit* / *Elément*** | ***avant distillation du monomère HDI (en %)*** | ***après distillation du monomère HDI (en %)*** |
|---|---|---|
| HDI résiduel | 31 | 0,3 |
| Taux de transformation de l'HDI avant distillation | 69% | |
| Monocarbamate de butyle | 1,4 | 0,3 |
| Dimère vrai | 1,1 | 1,4 |
| Trimère vrai ( un seul cycle isocyanurate) | 15,8 | 20,5 |
| Bis-trimère + trimère-dimère | 12 | 17 |
| Lourds comportant des cycles isocyanurate et dimère | 38,7 | 60,5 |

Le ratio molaire Dimère vrai / Isocyanurate vrai est de 10%.

### Exemple 10 :

### Synthèse de polyisocyanate masqué MEKO à haute fonctionnalité

Dans un réacteur tricol équipé d'une agitation, d'une ampoule de coulée de 150 mL et inerté sous azote, on charge 51 g de HDT de l'exemple 8, 23,3 g de Solvesso® 100. La température du milieu réactionnel est alors de 22°C. On introduit dans l'ampoule de coulée 19,1 g de méthyléthylcétoxime. Cette dernière est coulée sur le milieu réactionnel agité en 10 minutes. La température du milieu réactionnel monte à 55°C. On termine la réaction par chauffage à 80°C pendant 2 heures, temps au bout duquel l'analyse infra rouge d'un prélèvement de masse réactionnel ne montre plus de bandes NCO.

Les caractéristiques du produit sont les suivantes :
Extrait sec : 75% dans Solvesso® 100
Titre NCO potentiel : 9,85%
Viscosité à 25°C : 11760 cps.

### Exemples 11 :

### Synthèse de polyisocyanate masqué MEKO à haute fonctionnalité

On procède comme pour l'exemple 10 en travaillant avec 114 g de polyisocyanate de l'exemple 3, 46 g de MEKO et 57 g de Solvesso® 100.

Les caractéristiques du produit sont les suivantes :
Extrait sec : 75% dans Solvesso® 100
Titre NCO potentiel : 9,7%
Viscosité à 25°C : 7215 cps

### Exemple 12 :

### Synthèse de polyisocyanate masqué DMP à haute fonctionnalité

On procède comme pour l'exemple 10 en travaillant avec 110 g de polyisocyanate de l'exemple 3, 48 g de DMP et 53 g de Solvesso® 100.

Les caractéristiques du produit sont les suivantes :
Extrait sec : 75% dans Solvesso® 100
Titre NCO potentiel : 10 %
Viscosité à 25°C : 11650 cps

Le tableau ci-dessous présente le bilan des viscosités des polyisocyanates à fonctions NCO libres et masquées :

| Poly NCO non masqué (TT HDI) | Viscosité du poly NCO non masqué à 25°C (cps) | Ratio viscosités poly NCO HF/ HDT standard | Poly NCO masqué correspondant 75% extrait sec (E.S.) dans Solvesso® 100 | Viscosité du poly NCO non masqué à 25°C (75% E.S.) | Ratio des viscosités poly NCO HF masqué / HDT standard masqué |
|---|---|---|---|---|---|
| HDT standard A(33%) | 2400 | | HDT masqué MEKO (B) | 3250 | |
| Exemple 3 (63,5) | 12654 | Ex.3 / (A) 5,3 | Exemple 12 (haute Fonctionnalité MEKO) | 7215 | Ex. 12 / (B) 2,22 |
| Exemple 3 (63, 5) | 12654 | Ex.3 / (A) 5,3 | Exemple 13 (haute Fonctionnalité DMP) | 11650 | Ex.13 / (B) 3,6 |
| Exemple 9 (68,2) | 44860 | Ex.9 / (A) 18,7 | Exemple 11 (haute Fonctionnalité MEKO) | 11760 | Ex.11 / (A) 3,6 |

On constate de manière surprenante que, pour les polyisocyanates masqués correspondants, l'augmentation de viscosité attendue est bien plus faible que celle observée pour les polyisocyanates à fonction NCO libres et ce pour un même extrait sec.

Ainsi pour l'exemple 11, alors que l'on s'attend à une augmentation de viscosité multipliée par 5,3 (en conformité avec l'augmentation de viscosité mesurée pour le polyisocyanate à fonctions isocyanates libres de l'exemple 3) on mesure une augmentation de viscosité de seulement 2,2.

Ce phénomène est encore accentué pour des produits hautement fonctionnalisés (qui ont un taux de transformation en monomère élevé).

Ainsi, pour l'exemple 10, on mesure une augmentation de viscosité de 3,6 alors que l'on aurait dû avoir une augmentation de 18,7.

On voit tout l'intérêt d'utiliser de telles compositions pour diminuer de manière importante la quantité de solvant de dilution d'où un gain potentiel en composés organiques volatils (COV).

### Exemples d'application aux revêtements

Les procédures suivantes sont appliquées dans chacun des exemples de revêtements suivants. Le catalyseur ainsi qu'un agent d'allongement de la durée de vie en pot sont combinés puis mélangés au polyol, aux additifs, et au solvant, pour former le Composant I. Le polyisocyanate, qui peut être mélangé au solvant afin de réduire la viscosité, forme le Composant II. Les Composants I et II sont alors mélangés et agités pendant 2 minutes, puis laissés au repos pendant 3 minutes. Les caractéristiques de viscosité et de réticulation sont alors mesurées pour chacun des systèmes. Puis ces derniers sont immédiatement appliqués sur des panneaux métalliques, acier ou aluminium, en utilisant un applicateur de forme carré. On laisse sécher les films de revêtements sur les panneaux dans un environnement caractérisé par une humidité relative de 50% et une température d'environ 21 °C (soit 70 °F). On teste ensuite les revêtements réticulés pour déterminer leurs propriétés de revêtement réticulé. Les méthodes de tests suivantes sont utilisées. La viscosité" est mesurée en utilisant une capsule de Zahn et exprimée en centipoise ("cps"). La durée de "sec-au-toucher" a été mesurée selon la norme ASTM D5895-96 en utilisant un appareil d'enregistrement de durée de réticulation et reportée comme le temps écoulé entre le début du test et la première apparition d'une marque de stylet dans le film de revêtement. Le temps de "sec-en-surface" a été mesuré selon la norme ASTM D5895-96 en utilisant un appareil d'enregistrement de durée de réticulation et reporté comme le temps écoulé entre le début du test et le moment où le stylet ne marque plus le film de revêtement. Le temps de "sec-à-coeur" a été mesuré selon la norme ASTM D5895-96 en utilisant un appareil d'enregistrement de durée de réticulation et reporté comme le temps écoulé entre le début du test et le moment où le stylet ne marque plus la surface du film de revêtement. Le temps "hors-collant" a été mesuré en touchant la surface du film de revêtement avec un coton-tige et reporté comme le temps au bout duquel le coton-tige ne laisse plus de marque sur la surface du film de revêtement. La durée de vie en pot a été mesurée par mesure de la viscosité, pour la première fois lors du mélange des composants de la composition, jusqu'à ce que cette viscosité initiale de la composition ait doublé. La dureté Persoz a été mesurée en utilisant un pendule de Erichsen (Erichsen Pendulum Hardness Tester), et reporté en secondes ("s"). La résistance à l'impact et la résistance à l'impact retour ont chacun été calculés selon la norme ASTM G14-88 et reportées en pouces-livres ("in-1b"). La "dureté au crayon" a été mesurée par des essais de rayures du film de revêtement réticulé à l'aide d'une pointe de crayon aiguisée, en formant un angle de 45° par rapport au plan de la surface du film, et reportée comme étant le plus grand degré de dureté du crayon qui n'a pas permis de rayer la surface du film. La flexibilité conique a été mesurée selon la norme ASTM D522 et reportée comme étant la position relative sur un cône de chacune-des fissures du film ou bien avec la mention "pass" si aucune fissure n'était apparente.

### Exemple A et Exemples Comparatifs C-A et C-B

Les compositions de l'Exemple A des Exemples Comparatifs C-A et C-B contiennent chacun un composé isocyanate, un polyol (Joncry1 922, un polyol acrylique de masse molaire moyenne pondérale d'environ 1 500 et de nombre d'hydroxyle de 140, à 80 % en poids dans l'acétate de butyle, disponible chez Johnson Polymers) un agent de rhéologie (BYK 361) et des solvants (Aromatic 100 acétate de butyle) dans des proportions relatives telles que présentées au TABLEAU I. Le polyol, l'agent de rhéologie et les solvants sont mélangés puis le polyisocyanate est ajouté au mélange. Chacune des compositions de l'Exemple A et des Exemples Comparatifs C-A et C-B présentent un équivalent ratio isocyanate/groupes hydroxyle de 1,05 et une teneur en solides de 63 % en poids.

**-- TABLEAU I --**

| | Ex. A | Ex. C-A | Ex. C-B |
|---|---|---|---|
| Polyol | 49,9 | 52,9 | 51,2 |
| Agent de rhéologie (10 % dans l'acétate de butyle) | 0,3 | 0,3 | 0,3 |
| Aromatic 100 | 10,5 | 10,2 | 8,9 |
| Acétate de butyle | 15,8 | 15,4 | 13,4 |
| Ex.2 | 23,5 | -- | -- |
| Ex. Comp. 1 | -- | 21,2 | -- |
| Ex. Comp. 2 | -- | -- | 26,2 |

Le TABLEAU II compare les données de réticulation de l'Exemple A et des Exemples Comparatifs C-A et C-B. Le temps "hors-collant" de la composition de l'Exemple A est similaire à ceux des compositions des Exemples Comparatifs C-A et C-B, alors que la composition de l'Exemple A a montré des temps de "sec-au-toucher", de "sec-en-surface" et de "sec-à-coeur" plus courts, que ceux des Exemples Comparatifs C-A et C-B.

**-- TABLEAU II --**

| | Ex. A | Ex. C-A | Fx. C-B |
|---|---|---|---|
| "Sec-au-toucher" (heures) | 0,2 | 0,3 | 0,6 |
| "Sec-en-surface" (heures) | 7,6 | 9,0 | 8,0 |
| "Sec-à-coeur" (heures) | 8,0 | 9,0 | 19,8 |
| Durée de vie en pot, capsule de Zahn n° 3 (heures) | 2,2 | 2,3 | 2,9 |
| "Hors-collant (heures) | 3,0 | 4,0 | 2,0 |

Les données de dureté sont comparées dans le TABLEAU III. La dureté de la composition de l'Exemple A a augmenté plus vite que celles des compositions des Exemples Comparatifs C-A et C-B.

**-- TABLEAU III --**

| Dureté Persoz (%): | Ex. A | Ex C-A | Ex. C-B |
|---|---|---|---|
| 1 jour | 84 | 84 | 92 |
| 2 jours | 92 | 90 | 93 |
| 3 jours | 93 | 92 | 94 |
| 4 jours | 100 | 100 | 100 |

Le TABLEAU IV présente les propriétés physiques des compositions des Exemple A et Comparatifs C-A et C-B. Bien que la dureté Persoz du film préparé à partir de la composition de l'Exemple Comparative C-B soit légèrement supérieure à celle observée pour l'Exemple A et l'Exemple Comparatif C-A, d'autres propriétés sont substantiellement identiques pour chacun des Exemple A et Exemples Comparatifs C-A et C-B.

**-- TABLEAU VIII --**

| | Ex. A | Ex. C-A | Ex. C-B |
|---|---|---|---|
| Impact (in-1b) | 160 | 160 | 160 |
| Impact Retour (in-1b) | 160 | 160 | 160 |
| Dureté Persoz (sec) | 215 | 210 | 232 |
| Dureté crayon | F | F | F |
| Flexibilité, conique | Pass | Pass | Pass |

### Exemples B, C et D

Les compositions des Exemples B, C et D contiennent un composé polyisocyanate, un polyol (Joncryl 922), et un agent de rhéologie (BYK 361). Les quantités de solvants (acétate de butyle et xylène) sont telles que présentées dans le TABLEAU V.

Les Exemples C et D contiennent chacun en outre un catalyseur (T-12 dilaurate de dibutylétain, disponible chez Air Products and Chemicals, Inc.). L'Exemple D contient de plus un agent d'allongement de la durée de vie en pot (acide acétique glacial). Les compositions des Exemples B, C et D ont chacune une teneur en solide de 50%.

**-- TABLEAU V --**

| | Ex. B | Ex. C | Ex. D |
|---|---|---|---|
| Polyol | 39,32 | 39,30 | 39,30 |
| Agent de rhéologie (1 % dans l'acétate de butyle) | 3,00 | 3,00 | 3,00 |
| Catalyseur (1 % dans l'acétate de butyle) | -- | 2,50 | - |
| Catalyseur (5 % dans l'acide acétique glacial) | -- | -- | 0,50 |
| Acétate de butyle | 12,11 | 9,64 | 11,86 |
| Xylène | 25,00 | 25,00 | 24,78 |
| Exemple 2 (90% dans l'acétate de butyle) | 20,57 | 20,56 | 20,56 |

Les résultats des tests de réticulation pour les compositions des Exemples B, C et D sont présentés dans le TABLEAU VI ci-dessous. L'utilisation du catalyseur peut réduire de manière significative la durée de réticulation ; cependant, l'utilisation d'un catalyseur de réticulation sans agent d'allongement de la durée de vie en pot a conduit à un temps de gel très court. La composition de l'Exemple D a montré des durées de réticulation significativement réduites, de même qu'une durée de vie et un de temps de gel suffisant pour permettre la manipulation du revêtement.

**-- TABLEAU VI -**

| | Ex. B | Ex. C | Ex. D |
|---|---|---|---|
| "Sec-au-toucher" (minutes) | 17 | 14 | 8 |
| "Sec-en-surface" (minutes) | 385 | 44 | 22 |
| "Sec-à-coeur" (minutes) | 485 | 100 | 30 |
| Durée de vie en pot, capsule de Zahn n° 3 (minutes) | 280 | <20 | 115 |
| "Hors-collant" (minutes) | 250 | 70 | 35 |
| Temps de gel (minutes) | >360 | 30 | 150 |

### Exemples E et F et Exemples Comparatifs C-C and C-D

Les compositions des Exemples E et F et des Exemples Comparatifs C-C et C-D contiennent chacun un polyisocyanate, un polyol (Joncry1 922), un agent de rhéologie (BYK 361), des solvants (acétate de butyle et xylène) un catalyseur (T-12) un agent d'allongement de la durée de vie en pot (acide acétique glacial), dans des proportions relatives telles que présentées dans le TABLEAU VII ci-dessous. Le polyol, l'agent de rhéologie, les solvants, le catalyseur et l'agent d'allongement de la durée de vie en pot sont mélangés puis le polyisocyanate est ajouté au mélange. Les compositions de revêtement des Exemples E et F et des Exemples Comparatifs C-C et C-D présentent chacun un équivalent ratio isocyanate/groupes hydroxyle de 1,5 et une teneur en solides 50 % en poids.

**-- TABLEAU VII --**

| | Ex. E | Ex. F | Ex. C-C | Ex. C-D |
|---|---|---|---|---|
| Polyol | 39,30 | 40,36 | 41,59 | 40,46 |
| Agent de rhéologie (1 % dans l'acétate de butyle) | 3,00 | 3,00 | 3,00 | 3,00 |
| Catalyseur (5% dans l'acide acétique glacial) | 0,50 | 0,50 | 0,50 | 0,50 |
| Acétate de butyle | 11,86 | 11,74 | 13,46 | 10,69 |
| Xylène | 24,78 | 24,78 | 24,78 | 24,78 |
| Exemple 2 (90% dans l'acétate de butyle) | 20,56 | -- | -- | -- |
| Exemple 1 (90% dans l'acétate de butyle) | -- | 19,62 | -- | -- |
| Exemple comparatif 1 | -- | -- | 16,67 | -- |
| Exemple comparatif 2 | -- | -- | -- | 20,58 |

Les données de réticulation pour les compositions des Exemples E et F et des Exemples Comparative C-C et C-D sont présentées dans le TABLEAU VIII ci-dessous.

**-- TABLEAU VIII --**

| | Ex. E | Ex.F | Ex. C-C | Ex. C-D |
|---|---|---|---|---|
| "Sec-au-toucher" (minutes) | 5 | 11 | 13 | 13 |
| "Sec-en-surface" (minutes) | 22 | 24 | 46 | 77 |
| "Sec-à-coeur" (minutes) | 30 | 45 | 46 | 155 |
| Durée de vie en pot, capsule de Zahn n° 3 (minutes) | 120 | 125 | 140 | 190 |
| "Hors-collant" (minutes) | 30 | 40 | 70 | 40 |
| Temps de gel (minutes) | 150 | 165 | 190 | >240 |

Les Exemples E et F ont donné des temps de réticulation plus courts que ceux des compositions des Exemples Comparatifs C-C3 et C-D. La composition de l'Exemple E a conduit aux temps de réticulation les plus courts, alors que sa durée de vie en pot et son temps de gel sont restés longs.

### Exemples G et H

Les compositions des Exemples G et H contiennent un composé polyisocyanate, un polyol (Joncry1 922), un agent de rhéologie (BYK 361), des solvants (acétate de butyle et xylène ) et un agent d'allongement de la durée de vie en pot (2,4-pentanedione ou acide acétique glacial) dans les proportions relatives présentées dans le TABLEAU IX ci-dessous, chacune présentant une teneur en solides de 50 % en poids.

**-- TABLEAU IX -**

| | Ex. G | Ex. H |
|---|---|---|
| Polyol | 41,59 | 41,59 |
| Agent de rhéologie (1 % dans l'acétate de butyle) | 3,00 | 3,00 |
| Catalyseur (5% dans la 2,4-pentanedione) | 0,50 | -- |
| Catalyseur (5% dans l'acide acétique glacial) | -- | 0,50 |
| Acétate de butyle | 13,46 | 13,46 |
| Xylène | 24,78 | 24,78 |
| Exemple 2 | 16,67 | 16,67 |

Les caractéristiques de réticulation des compositions des Exemples G et H sont présentées dans le TABLEAU X ci-dessous.

**-- TABLEAU X --**

| | Ex. G | Ex. H |
|---|---|---|
| Durée de vie en pot, capsule de Zahn n° 2 (minutes) | 70 | 110 |
| Temps de gel (minutes) | 110 | 180 |

Les résultats présentés dans le TABLEAU X indiquent que l'acide acétique glacial est responsable d'un effet amélioré d'allongement de la durée de vie en pot que la 2,4-pentanedione.

La composition de revêtement de la présente invention présente une durée de séchage en surface et une durée de séchage à coeur rapides, à température ambiante ainsi qu'un bonne durée de vie en pot. Les revêtements réticulés provenant de la composition de revêtement de la présente invention montrent de bonnes propriétés de dureté de surface, de flexibilité et de résistance à l'impact.

## Revendications

1. Composition polyisocyanate ayant une fonctionnalité moyenne supérieure à 3, avantageusement supérieure à 3,5, de préférence supérieure à 4, obtenue par polycondensation de monomères diisocyanates ou triisocyanates, comportant :
(a) de 0 à 5 % en masse par rapport à la masse totale des composants a), b) et c) de composés porteurs d'une seule fonction urétidinedione ayant une masse moléculaire au plus égale à deux fois la masse moléculaire moyenne des monomères isocyanates ayant la masse moléculaire la plus élevée ;
(b) de 0 à 45 % en masse par rapport à la masse totale des composants a), b) et c) de composés porteurs d'une seule fonction isocyanurate et de masse moléculaire au plus égale à trois fois la masse moléculaire moyenne desdits monomères isocyanates ayant la masse moléculaire la plus élevée ;
le rapport molaire de (a)/(b) étant inférieur à 20/80 et supérieur à 2/98,
(c) au moins 40 % en masse par rapport à la masse totale des composants a), b) et c) d'un mélange de composés polyisocyanates présentant une masse moléculaire au moins égale à trois fois la masse moléculaire moyenne des monomères isocyanates ayant la masse moléculaire la plus petite et porteurs d'au moins deux fonctions isocyanates, et
ledit mélange comportant
(i) des composés porteurs d'au moins deux fonctions isocyanurates,
(ii) des composés porteurs d'au moins deux fonctions urétidinediones,
(iii) des composés porteurs d'au moins une fonction isocyanurate et d'au moins une fonction urétidinedione, présentant une masse moléculaire supérieure à trois fois la masse moléculaire la plus élevée des composés isocyanates monomères ci-dessus ;
ledit mélange présentant un rapport fonctions carbonyles appartenant à un cycle urétidinedionc/fonctions carbonyles appartenant à un cycle isocyanurate + fonctions carbonyles appartenant à un cycle urétidinedione au moins égal à 4 % ;
d) de 0 à 25 % en masse par rapport à la masse des composants a), b), c), d) et e) de composés porteurs d'au moins une fonction isocyanate, différents de a), b) et c) ; et
e) de 0 à 10 % en masse par rapport à la masse des composants a), b), c), d) et e) d'impuretés.

2. Composition polyisocyanate selon la revendication 1, **caractérisée en ce qu'**elle comporte de 0,1 à 5 % en masse du composant (a) par rapport à la masse totale des composants a) + b) + c).

3. Composition polyisocyanate selon la revendication 1, **caractérisée en ce qu'**elle comporte de 5 à 40 % en masse du composant (b) par rapport à la masse totale des composants a) + b) + c).

4. Composition polyisocyanate selon la revendication 1, **caractérisée en ce que** le composant c) représente au moins 45 %, avantageusement au moins 50 % en masse par rapport à la masse totale des composants a) + b) + c).

5. Composition polyisocyanate selon la revendication 1, **caractérisée en ce que** le composant d) représente au plus 10 % en masse par rapport à la masse totale des composants a) + b) + c) + d) + c).

6. Composition polyisocyanate selon la revendication 1, **caractérisée en ce que** le composant e) représente au plus 5 % en masse par rapport à la masse totale des composants a) + b) + c) + d) + e).

7. Composition polyisocyanate selon la revendication 1, **caractérisée en ce que** le composant e) consiste en résidus de catalyseur de polycondensation et/ou en sous-produits de polycondensation des monomères isocyanates de départ.

8. Composition polyisocyanate selon la revendication 1, **caractérisée en ce que** le composant d) comprend ledit ou lesdits monomères isocyanates résiduels.

9. Composition polyisocyanate selon la revendication 8, **caractérisée en ce que** ledit ou lesdits monomères isocyanates représentent au moins 2 %, avantageusement au plus 1 %, en masse de la masse des composants a) + b) + c) + d) + e).

10. Composition selon l'une quelconque des revendications précédentes, **caractérisée en ce qu'**elle comporte en outre une quantité d'au plus 200 %, avantageusement au plus 100 % en masse de a) + b) + c) + d) + e), de préférence au plus 50 % d'un solvant organique ou mélange de solvants organiques liquide à température ambiante, ne comportant pas de fonction isocyanate, ne comportant pas de fonction susceptible de réagir avec la fonction isocyanates, ayant un point d'ébullition d'au plus 200 °C et étant miscible avec les composants a), b), c), d) et e).

11. Composition selon l'une quelconque des revendications 1 à 10, **caractérisée en ce que** les composés comportant au moins un cycle urétidinedione et au moins un cycle isocyanurate comprennent un groupe choisi parmi les formules (I) à (V) suivantes et leurs mélanges : 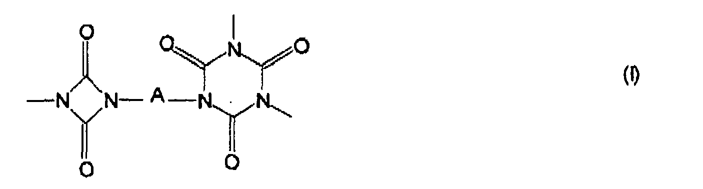 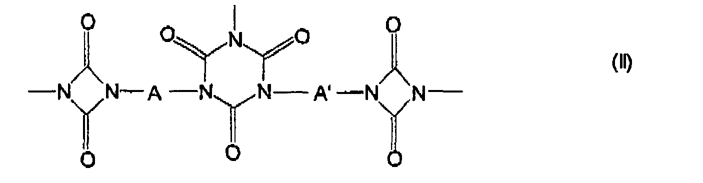 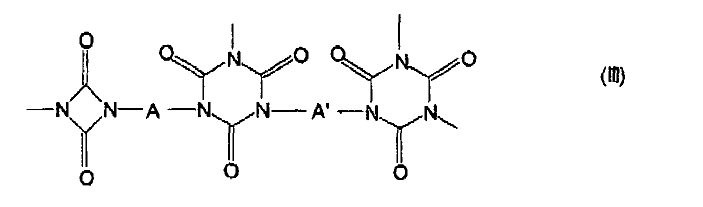 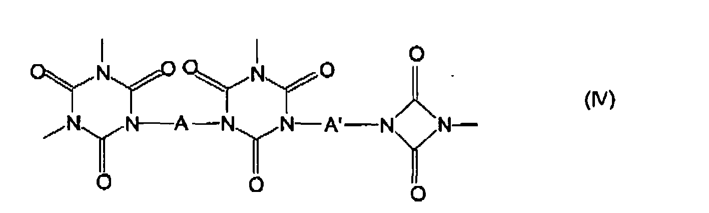 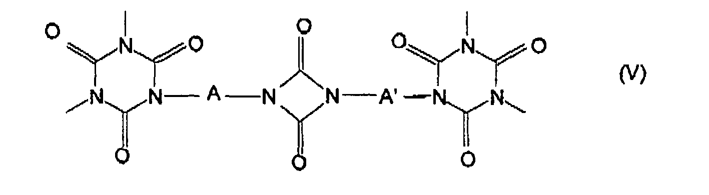 dans lesquels A et A' identiques ou différents représentent les restes d'un composé isocyanate monomère après enlèvement de deux fonctions isocyanates.

12. Composition selon l'une quelconque des revendications précédentes, **caractérisée en ce qu'**elle comporte de 1 à 100 %, avantageusement de 10 à 100 % des groupes NCO présents dans la composition masqués à l'aide d'un agent masquant.

13. Composition selon la revendication 12, **caractérisée en ce que** l'agent masquant est un agent masquant monofonctionnel choisi parmi les dérivée de l'hydroxylamine, les oximes, les dérivés des phénols, les dérivés des amides, les malonates, les cétoesters, les hydroxamates et les composés hétérocycliques azotés.

14. Composition selon la revendication 13, **caractérisée en ce que** l'agent masquant est la méthyléthylcétoxime ou le pyruvate oxime de méthyle.

15. Composition selon la revendication 12, **caractérisée en ce que** l'agent masquant est choisi parmi les groupes pyrolyle, 2H-pyrrolyle, imidazolyle, pyrimidinyle, pyridazinyle, pyrazinyle, pyimidinyle, pyridazinyle, indolizinyle, iso-indolyle, indolyle, indolyle, indozalyle, purinyle, quinolizinyle, isoquinolyle, pyrazolidinyle, imidazolidinyle et triazolyle.

16. Procédé de préparation d'une composition polyisocyanate selon l'une des revendications 1 à 15 comprenant les étapes suivantes :
i) on prépare un milieu réactionnel de départ comprenant le(s) isocyanate(s) monomère(s) de départ, et éventuellement d'autres monomères réactifs avec la fonction isocyanate ;
ii) on réalise l'étape ii-1) ou bien l'étape ii-2) suivante :
ii-1) on chauffe le milieu réactionnel de départ en l'absence de catalyseur de dimérisation, à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ; ou bien
ii-2) on fait réagir le milieu réactionnel de départ en présence d'un catalyseur de dimérisation, éventuellement en chauffant le milieu réactionnel à une température d'au moins 50°C ;
iii) on fait réagir le produit réactionnel de l'étape i) contenant des monomères n'ayant pas réagi avec un catalyseur de (cyclo)triraérisation, dans les conditions de (cyclo)trimérisation ;
iv) on élimine du produit réactionnel de l'étape ii) les monomères de départ n'ayant pas réagi ;
v) éventuellement, on fait réagir le milieu réactionnel avec un agent masquant avant, pendant, ou après les étapes i) à iv) ;
ledit procédé étant **caractérisé en ce que** l'on effectue l'étape ii) jusqu'à un taux de transformation d'au moins 56 % de monomères isocyanates présents dans le milieu réactionnel initial.

17. Procédé de préparation d'une composition polyisocyanate selon l'une quelconque des revendications 1 à 15 comprenant les étapes suivantes :
i) on prépare un milieu réactionnel de départ comprenant le(s) isocyanate(s) monomère(s) de départ, et éventuellement d'autres monomères réactifs avec la fonction isocyanate ;
ii) on fait réagir les monomères de départ, avec un catalyseur de (cyclo)trimérisation dans les conditions de (cyclo)trimérisation ;
iii) on réalise l'étape iii-1) ou bien l'étape iii-2) suivante :
iii-1) on chauffe le produit réactionnel de l'étape i) contenant des isocyanates monomères n'ayant pas réagi, en l'absence de catalyseur de dimérisation, à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ; ou bien
iii-2) on fait réagir le milieu réactionnel de départ en présence d'un catalyseur de dimérisation, éventuellement en chauffant le milieu réactionnel à une température d'au moins 50°C ;
iv) on élimine du produit réactionnel de l'étape ii) les monomères de départ n'ayant pas réagi ;
v) éventuellement, on fait réagir le milieu réactionnel avec un agent masquant avant, pendant, ou après les étapes i) à iv) ;
ledit procédé étant **caractérisé en ce que** l'on effectue l'étape iii) jusqu'à un taux de transformation d'au moins 56 % de monomères isocyanates présents dans le milieu réactionnel initial.

18. Procédé selon la revendication 16 ou 17, **caractérisé en ce que** les étapes ii-1) et iii-1) de chauffage du milieu réactionnel sont réalisées selon un gradient de température décroissant.

19. Utilisation d'une composition selon l'une quelconque des revendications 1 à 15, pour la préparation d'un revêtement, notamment une peinture.

20. Composition de revêtement réactive comprenant une composition selon l'une quelconque des revendications 1 à 15, et un coréactif à hydrogène réactif pour addition successive ou simultanée.

21. Composition de revêtement réactive selon la revendication 20, dans laquelle :
- la composition polyisocyanate présente une viscosité comprise entre environ 1 000 mPa.s et environ 50 000 mPa.s_{.}, et
- le coréactif à hydrogène réactif est un composé polyol ayant un nombre d'hydroxyle compris entre environ 50 et environ 250 et une masse molaire comprise entre environ 500 et environ 15 000.

22. Composition selon la revendication 21 dans laquelle la composition polyisocyanate et le polyol sont présents dans des proportions efficaces pour fournir de 0,9 à 2,0 équivalentes de groupes isocyanates par équivalent de groupes hydroxyle.

23. Composition selon la revendication 21 dans laquelle la composition polyisocyanate comprend plus de 40 % en poids, par rapport au poids total de l'isocyanate oligomère, d'espèces oligomères polyisocyanate comprenant plus de trois unités répétitives monomères par molécule.

24. Composition selon la revendication 21 dans laquelle la composition polyisocyanate comprend en outre des espèces dimères, chacune consistant en deux unités répétitives monomères par molécule.

25. Composition selon la revendication 21 dans laquelle la composition polyisocyanate comprend en outre des espèces trimères, chacune consistant en trois unités répétitives monomères par molécule.

26. Composition selon la revendication 21 dans laquelle le polyol est un polyol polyacrylate.

27. Composition selon la revendication 21, comprenant en outre un catalyseur pour réticuler de manière catalytique la dite composition.

28. Composition selon la revendication 21, comprenant en outre un agent d'allongement de la durée de vie en pot.

29. Procédé de préparation d'une composition de revétement réactive selon l'une quelconque des revendications 20 à 28, comprenant les étapes suivantes :
- mettre une composition polyisocyanate telle que définie dans l'une quelcongue des revendications 1 à 15 en présence du coréactif à hydrogène réactif ;
et
- chauffer le milieu réactionnel ainsi constitué à une température permettant la réticulation des composants.

30. Revêtement comprenant le produit de réaction de réticulation d'une composition de revêtement réactive selon l'une quelconque des revendications 20 à 28.

31. Procédé de fabrication d'un revêtement, comprenant l'application d'une couche de composition de revêtement réactive selon l'une quelconque des revendications 20 à 28 sur au moins une partie d'au moins une surface d'un substrat, et la réticulation de la couche de composition de revêtement sur le dit substrat.

32. Article comprenant un substrat possédant une surface et une couche de revêtement sur au moins une partie de ladite surface, la dite couche de revêtement comprenant le produit de la réaction de réticulation de la composition de revêtement réactive selon l'une quelconque des revendications 20 à 28.

## Claims

1. Polyisocyanate composition having an average functionality greater than 3, advantageously greater than 3.5, preferably greater than 4, obtained by polycondensation of diisocyanate or triisocyanate monomers, comprising:
(a) from 0 to 5 % by weight, with respect to the total weight of components a), b) and c), of compounds carrying a single uretidinedione function having a molecular weight at most equal to twice the average molecular weight of the isocyanate monomers having the highest molecular weight;
(b) from 0 to 45 % by weight, with respect to the total weight of components a), b) and c), of compounds carrying a single isocyanurate function and having a molecular weight at most equal to three times the average molecular weight of said isocyanate monomers having the highest molecular weight; the molar ratio of (a)/(b) being less than 20/80 and greater than 2/98;
(c) at least 40 % by weight, with respect to the total weight of components a), b) and c), of a mixture of polyisocyanate compounds having a molecular weight at least equal to three times the average molecular weight of the isocyanate monomers having the lowest molecular weight and carrying at least two isocyanate functions, and
said mixture comprising
(i) compounds carrying at least two isocyanurate functions,
(ii) compounds carrying at least two uretidinedione functions,
(iii) compounds carrying at least one isocyanurate function and at least one uretidinedione function, having a molecular weight greater than three times the highest molecular weight of the above isocyanate monomer compounds; said mixture having a ratio of carbonyl functions belonging to a uretidinedione ring/carbonyl functions belonging to an isocyanurate ring + carbonyl functions belonging to a uretidinedione ring at least equal to 4 %;
d) from 0 to 25 % by weight, with respect to the weight of components a), b), c), d) and e), of compounds carrying at least one isocyanate function, which are different from a), b) and c); and
e) from 0 to 10 % by weight, with respect to the weight of components a), b), c), d) and e), of impurities.

2. Polyisocyanate composition according to claim 1, **characterised in that** it comprises from 0.1 to 5 % by weight of component (a), with respect to the total weight of components a) + b) +c).

3. Polyisocyanate composition according to claim 1, **characterised in that** it comprises from 5 to 40 % by weight of component (b), with respect to the total weight of components a) + b) +c).

4. Polyisocyanate composition according to claim 1, **characterised in that** component c) represents at least 45 %, advantageously at least 50 %, by weight, with respect to the total weight of components a) + b) +c).

5. Polyisocyanate composition according to claim 1, **characterised in that** component d) represents at most 10 % by weight, with respect to the total weight of components a) + b) +c) +d) + e).

6. Polyisocyanate composition according to claim 1, **characterised in that** component e) represents at most 5 % by weight, with respect to the total weight of components a) + b) +c) +d) + e).

7. Polyisocyanate composition according to claim 1, **characterised in that** component e) consists of polycondensation catalyst residues and/or of by-products of the polycondensation of the starting isocyanate monomers.

8. Polyisocyanate composition according to claim 1, **characterised in that** component d) comprises said residual isocyanate monomer(s).

9. Polyisocyanate composition according to claim 8, **characterised in that** said isocyanate monomer(s) represent at least 2 %, advantageously at most 1 %, by weight of the weight of components a) +b) +c) +d) +e).

10. Composition according to any one of the preceding claims, **characterised in that** it additionally comprises an amount of at most 200 %, advantageously at most 100 %, by weight of a) +b +c) +d) +e), preferably at most 50 %, of an organic solvent or mixture of organic solvents, which is liquid at ambient temperature, which does not contain an isocyanate function, which does not contain a function capable of reacting with the isocyanate function, which has a boiling point of at most 200°C and which is miscible with the components a), b), c), d) and e).

11. Composition according to any one of claims 1 to 10, **characterised in that** the compounds containing at least one uretidinedione ring and at least one isocyanurate ring comprise a group selected from the following formulae (I) to (V) and mixtures thereof: 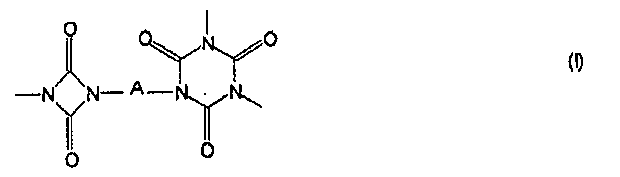 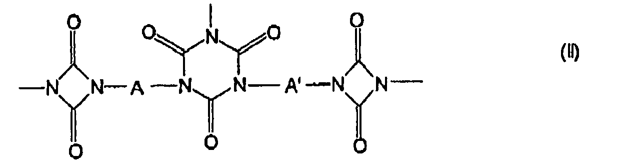 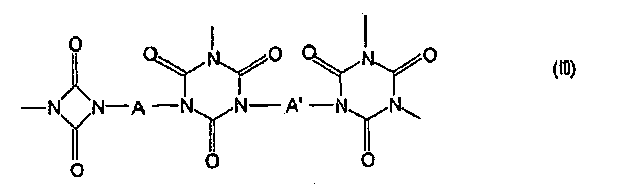 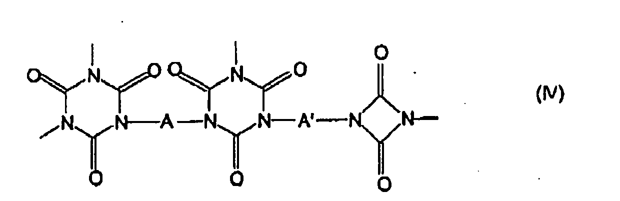 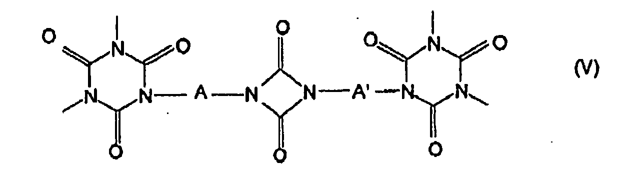 wherein A and A', which are the same or different, represent residues of an isocyanate monomer compound after removal of two isocyanate functions.

12. Composition according to any one of the preceding claims, **characterised in that** it has from 1 to 100 %, advantageously from 10 to 100 %, of the NCO groups present in the composition masked using a masking agent.

13. Composition according to claim 12, **characterised in that** the masking agent is a monofunctional masking agent selected from hydroxylamine derivatives, oximes, phenol derivatives, amide derivatives, malonates, ketoesters, hydroxamates and nitrogen-containing heterocyclic compounds.

14. Composition according to claim 13, **characterised in that** the masking agent is methyl ethyl ketoxime or methyl pyruvate oxime.

15. Composition according to claim 12, **characterised in that** the masking agent is selected from pyrrolyl, 2H-pyrrolyl, imidazolyl, pyrimidinyl, pyridazinyl, pyrazinyl, pyrimidinyl, pyridazinyl, indolizinyl, iso-indolyl, indolyl, indolyl, indozolyl, purinyl, quinolizinyl, isoquinolyl, pyrazolidinyl, imidazolidinyl and triazolyl groups.

16. Process for the preparation of a polyisocyanate composition according to one of claims 1 to 15, comprising the following steps:
i) a starting reaction mixture is prepared, comprising the starting isocyanate monomer(s) and optionally other monomers that are reactive with the isocyanate function;
ii) the following step ii-1) or step ii-2) is carried out:
ii-1) the starting reaction mixture is heated, in the absence of dimerisation catalyst, at a temperature of at least 50°C, advantageously at least 80°C, preferably at least 120°C, and at most 200°C, advantageously at most 170°C, for a period less than 24 hours, advantageously less than 5 hours; or
ii-2) the starting reaction mixture is reacted in the presence of a dimerisation catalyst, optionally by heating the reaction mixture at a temperature of at least 50°C;
iii) the reaction product of step i) containing unreacted monomers is reacted with a (cyclo)trimerisation catalyst, under conditions of (cyclo)trimerisation;
iv) the unreacted starting monomers are removed from the reaction product of step ii);
v) optionally, the reaction mixture is reacted with a masking agent before, during or after steps i) to iv);
said process being **characterised in that** step ii) is carried out until the degree of conversion of the isocyanate monomers present in the initial reaction mixture is at least 56 %.

17. Process for the preparation of a polyisocyanate composition according to any one of claims 1 to 15, comprising the following steps:
i) a starting reaction mixture is prepared, comprising the starting isocyanate monomer(s) and optionally other monomers that are reactive with the isocyanate function;
ii) the starting monomers are reacted with a (cyclo)trimerisation catalyst under conditions of (cyclo)trimerisation;
iii) the following step iii-1) or step iii-2) is carried out:
iii-1) the reaction product of step i) containing unreacted isocyanate monomers is heated, in the absence of dimerisation catalyst, at a temperature of at least 50°C, advantageously at least 80°C, preferably at least 120°C, and at most 200°C, advantageously at most 170°C, for a period less than 24 hours, advantageously less than 5 hours; or
iii-2) the starting reaction mixture is reacted in the presence of a dimerisation catalyst, optionally by heating the reaction mixture at a temperature of at least 50°C;
iv) the unreacted starting monomers are removed from the reaction product of step ii);
v) optionally, the reaction mixture is reacted with a masking agent before, during or after steps i) to iv);
said process being **characterised in that** step iii) is carried out until the degree of conversion of the isocyanate monomers present in the initial reaction mixture is at least 56 %.

18. Process according to claim 16 or 17, **characterised in that** steps ii-1) and iii-1) of heating the reaction mixture are carried out in accordance with a decreasing temperature gradient.

19. Use of a composition according to any one of claims 1 to 15 in the preparation of a coating, especially a paint.

20. Reactive coating composition comprising a composition according to any one of claims 1 to 15 and a co-reagent containing reactive hydrogen for successive or simultaneous addition.

21. Reactive coating composition according to claim 20, wherein:
- the polyisocyanate composition has a viscosity between approximately 1 000 mPa.s and approximately 50 000 mPa.s inclusive, and
- the co-reagent containing reactive hydrogen is a polyol compound having a hydroxyl number between approximately 50 and approximately 250 inclusive and a molar mass between approximately 500 and approximately 15 000 inclusive.

22. Composition according to claim 21, wherein the polyisocyanate composition and the polyol are present in proportions that are effective for providing from 0.9 to 2.0 equivalents of isocyanate groups per equivalent of hydroxyl groups.

23. Composition according to claim 21, wherein the polyisocyanate composition contains more than 40 % by weight, with respect to the total weight of the isocyanate oligomer, of polyisocyanate oligomer entities containing more than three repeating monomer units per molecule.

24. Composition according to claim 21, wherein the polyisocyanate composition additionally comprises dimeric entities, each consisting of two repeating monomer units per molecule.

25. Composition according to claim 21, wherein the polyisocyanate composition additionally comprises trimeric entities, each consisting of three repeating monomer units per molecule.

26. Composition according to claim 21, wherein the polyol is a polyacrylate polyol.

27. Composition according to claim 21, additionally comprising a catalyst for catalytically cross-linking said composition.

28. Composition according to claim 21, additionally comprising a pot-life-extending agent.

29. Process for the preparation of a reactive coating composition according to any one of claims 20 to 28, comprising the following steps:
- placing a polyisocyanate composition as defined in any one of claims 1 to 15 in the presence of the co-reagent containing reactive hydrogen;
and
- heating the reaction mixture thereby formed to a temperature allowing cross-linking of the constituents.

30. Coating comprising the reaction product of cross-linking of a reactive coating composition according to any one of claims 20 to 28.

31. Process for producing a coating, comprising application of a layer of reactive coating composition according to any one of claims 20 to 28 to at least part of at least one surface of a substrate and cross-linking of the layer of coating composition on said substrate.

32. Article comprising a substrate having a surface and a layer of coating on at least part of said surface, said layer of coating comprising the reaction product of cross-linking of the reactive coating composition according to any one of claims 20 to 28.

## Patentansprüche

1. Polyisocyanat-Zusammensetzung, die eine mittlere Funktionalität von mehr als 3, bevorzugt mehr als 3,5, am bevorzugtesten mehr als 4 aufweist, die erhalten wird durch Polykondensation von Diisocyanat- oder Triisocyanat-Monomeren, umfassend:
(a) 0 bis 5 Gew.-%, bezogen auf das Gesamtgewicht der Bestandteile a), b) und c), Verbindungen, die eine einzige Uretidindion-Funktion aufweisen und ein Molekulargewicht von höchstens dem Zweifachen des mittleren Molekulargewichts der lsocyanatmonomere aufweisen, die das höchste Molekulargewicht aufweisen;
(b) 0 bis 45 Gew.-%, bezogen auf das Gesamtgewicht der Komponenten a), b) und c), Verbindungen, die eine einzige Isocyanurat-Funktion aufweisen und ein Molekulargewicht von höchstens dem Dreifachen des mittleren Molekulargewichts der genannten Isocyanatmonomere aufweisen, die das höchste Molekulargewicht haben;
wobei das molare Verhältnis von (a)/(b) geringer ist als 20/80 und höher als 2/98,
(c) mindestens 40 Gew.-%, bezogen auf das Gesamtgewicht der Komponenten a), b) und c), eines Gemisches von Polyisocyanat-Verbindungen, die ein Molekulargewicht aufweisen, das mindestens gleich dem dreifachen mittleren Molekulargewicht der Isocyanatmonomere ist, deren Molekulargewicht am geringsten ist, und die mindestens zwei Isocyanat-Funktionen tragen, und
wobei die Mischung umfasst
(i) Verbindungen, die mindestens zwei Isocyanurat-Funktionen aufweisen,
(ii) Verbindungen, die mindestens zwei Uretidindion-Funktionen aufweisen,
(iii) Verbindungen, die mindestens eine Isocyanurat-Funktion und mindestens eine Uretidindion-Funktion aufweisen, ein Molekulargewicht aufweisen, das größer ist als das Dreifache des höchsten Molekulargewichts der vorstehend beschriebenen Isocyanatmonomer-Verbindungen;
wobei die Mischung ein Verhältnis von Carbonyl-Funktionen, die zu einem Uretidindion-Ring gehören/Carbonyl-Funktionen, die zu einem Isocyanurat-Ring gehören plus Carbonyl-Funktionen, die zu einem Uretidindion-Ring gehören, von mindestens gleich 4 % zeigen,
d) 0 bis 25 Gew.-%, bezogen auf das Gesamtgewicht der Komponenten a), b), c), d) und e), Verbindungen, die mindestens eine Isocyanat-Funktion tragen und verschieden sind von a), b) und c); und
e) 0 bis 10 Gew.-%, bezogen auf das Gesamtgewicht der Komponenten a), b), c), d) und e), Verunreinigungen.

2. Polyisocyanat-Zusammensetzung nach Anspruch 1, **dadurch charakterisiert, dass** sie 0,1 bis 5 Gew.-% der Komponente a) bezogen auf das Gesamtgewicht der Komponenten a) + b) + c) umfasst,

3. Polyisocyanat-Zusammensetzung nach Anspruch 1, **dadurch charakterisiert, dass** sie 5 bis 40 Gew.-% der Komponente b) bezogen auf das Gesamtgewicht der Komponenten a) + b) + c) umfasst.

4. Polyisocyanat-Zusammensetzung nach Anspruch 1, **dadurch charakterisiert, dass** die Komponente c) mindestens 45 Gew,-%, bevorzugt mindestens 50 Gew.-% bezogen auf das Gesamtgewicht der Komponenten a) + b) + c) ausmacht.

5. Polylsocyanat-Zusammensetzung nach Anspruch 1, **dadurch charakterisiert, dass** die Komponente d) mindestens 10 Gew.-% bezogen auf das Gesamtgewicht der Komponenten a) + b) + c) + d) + e) ausmacht.

6. Polyisocyanat-Zusammensetzung nach Anspruch 1, **dadurch charakterisiert, dass** die Komponente e) höchstens 5 Gew.-% bezogen auf das Gesamtgewicht der Komponenten a) + b) + c) + d) + e) ausmacht.

7. Polyisocyanat-Zusammensetzung nach Anspruch 1 , **dadurch charakterisiert, dass** die Komponente a) aus Rückständen des Polykondensationskatalysators und/oder Nebenprodukten der Polykondensation von Ausgangs-Isocyanatmonomeren besteht.

8. Polyisocyanat-Zusammensetzung nach Anspruch 1 , **dadurch charakterisiert, dass** die Komponente d) das oder die restlichen Isocyanatmonomere umfasst.

9. Polyisocyanat-Zusammensetzung nach Anspruch 8, **dadurch charakterisiert, dass** das oder die Isocyanatmonomere mindestens 2 Gew.-%, bevorzugt höchstens 1 Gew.-% des Gewichts der Komponenten a) + b) + c) + d) + e) ausmachen.

10. Zusammensetzung nach einem der vorhergehenden Ansprüche, **dadurch charakterisiert, dass** sie darüber hinaus eine Menge von mehr als 200 Gew.-%, bevorzugt höchstens 100 Gew.-% von a) + b) + c) + d) + e), bevorzugt höchstens 50 % eines organischen Lösungsmittels oder eines Gemisches von organischen Lösungsmitteln umfasst, die bei Umgebungstemperatur flüssig sind, keine Isocyanat-Funktion umfassen, keine Funktion umfassen, die mit der Isocyanat-Funktion reagieren kann, einen Siedepunkt von höchstens 200°C aufweisen und mit den Komponenten a), b), c), d) und e) mischbar sind.

11. Zusammensetzung nach einem der Ansprüche 1 bis 10, **dadurch charakterisiert, dass** die Verbindungen, die mindestens einen Uretidindion-Ring und mindestens einen Isocyanurat-Ring umfassen, eine Gruppe umfassen, die aus den folgenden Formeln (I) bis (V) und ihren Gemischen ausgewählt sind: 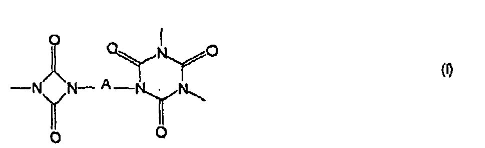 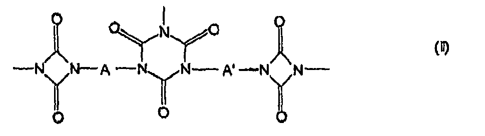 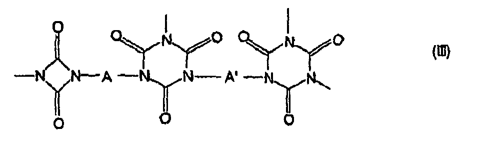 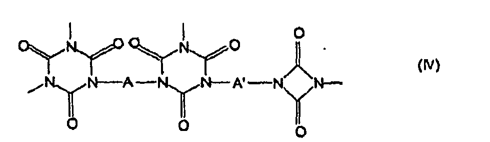 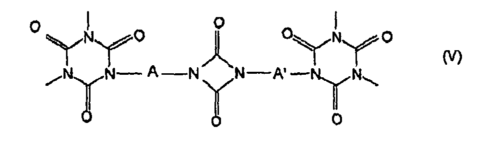 wobei A und A' gleich oder verschieden sind und die Reste einer monomeren Isocyanat-Verbindung nach Entfernung der beiden Isocyanat-Funktionen darstellen.

12. Zusammensetzung nach einem der vorstehenden Ansprüche, **dadurch charakterisiert, dass** sie 1 bis 100 %, bevorzugt 10 bis 100 % der in der Zusammensetzung vorhandenen NCO-Gruppen in mit Hilfe eines Maskierungsmittels maskierter Weise umfasst.

13. Zusammensetzung nach Anspruch 12, **dadurch charakterisiert, dass** das Maskierungsmittel ein monofunktionelles Maskierungsmittel ist, das ausgewählt wird aus Hydroxylamin-Derivaten, Oximen, Phenol-Derivaten, Amid-Derivaten, Malonaten, Ketoestern, Hydroxamaten und stickstoffhaltigen heterocyclischen Verbindungen.

14. Zusammensetzung nach Anspruch 13, **dadurch charakterisiert, dass** das Maskierungsmittel Methylethylketoxim oder Methylpyruvatoxim ist.

15. Zusammensetzung nach Anspruch 12, **dadurch charakterisiert, dass** das Maskierungsmittel ausgewählt wird aus Pyrrolyl-, 2H-Pyrrolyl-, Imidazolyl-, Pyrimidinyl-, Pyridazinyl-, Pyrazinyl-, Pyrlmidinyl-, Pyridazinyl-, Indolizinyl-, iso-Indolyl-, Indolyl-, Indazolyl-, Purinyl-, Chinolizlnyl-, Isochinolyl-, Pyrazolidinyl-, Imidazolidinyl- und Triazolyl-Gruppen.

16. Verfahren zur Herstellung einer Polyisocyanat-Zusammensetzung nach einem der Ansprüche 1 bis 15, umfassend die folgenden Schritte:
i) man stellt ein Ausgangsreaktionsmedium her, umfassend das/die Ausgangs-Isocyanatmonomer(e) und gegebenenfalls andere mit der Isocyanat-Funktion reaktive Monomere;
ii) man führt den folgenden Schritt ii-1) oder auch den Schritt ii)-2 durch:
ii-1) man erwärmt das Ausgangsreaktionsmedium in Abwesenheit des Dimerisierungskatalysators auf eine Temperatur von mindestens 50°C, bevorzugt höchstens 80°C, noch bevorzugter auf mindestens 120°C und höchstens 200°C, noch vorteilhafter höchstens 170°C, während einer Zeit von weniger als 24 Stunden, bevorzugt weniger als 5 Stunden; oder
ii-2) man lässt das Reaktionsmedium in Gegenwart eines Dimerisierungskatalysators reagieren, gegebenenfalls unter Erwärmen des Reaktionsmediums auf eine Temperatur von mindestens 50°C;
iii) man lässt das Reaktionsprodukt aus Schritt i), welches nicht reagierte Monomere enthält, mit einem (Cyclo)trimerisierungskatalysator unter den Bedingungen der (Cyclo)trimerisierung reagieren;
iv) man entfernt aus dem Reaktionsprodukt von Schritt ii) die nicht umgesetzten Ausgangs-Monomere;
v) man lässt das Reaktionsmedium gegebenenfalls vor, während oder nach den Schritten i) bis iv) mit einem Maskierungsmittel reagieren;
wobei das Verfahren **dadurch charakterisiert** ist, dass man Schritt ii) bis zu einem Umsetzungssgrad von mindestens 56 % der im Anfangsreaktionsmedium vorhandenen Isocyanatmonomere durchführt.

17. Herstellungsverfahren für eine Polyisocyanat-Zusammensetzung nach einem der Ansprüche 1 bis 15, umfassend die folgenden Schritte:
i) man stellt ein Ausgangsreaktionsmedium her, umfassend das/die Isocyanatmonomer(e) und gegebenenfalls andere mit der Isocyanat-Funktion reaktive Monomere;
ii) man lässt die Ausgangsmonomere mit einem (Cyclo)trimerisierungskatalysator unter den Bedingungen der (Cyclo)trimerisierung reagieren;
iii) man führt Schritt iii-1) oder auch Schritt iii-2) wie folgt durch:
iii-1) man erwärmt das Reaktionsprodukt von Schritt i), das nicht reagierte Isocyanatmonomere enthält, in Abwesenheit eines Dimerlsierungskatalysators auf eine Temperatur von mindestens 50°C, bevorzugt höchstens 80°C, bevorzugt mindestens 120°C und höchstens 200°C, bevorzugt höchstens 170°C während einer Zeit von weniger als 24 Stunden, bevorzugt weniger als 5 Stunden; oder
iii-2) man lässt das Ausgangsreaktionsmedium in Gegenwart eines Dimerisierungskatalysators gegebenenfalls unter Erwärmen des Reaktionsmediums auf eine Temperatur von höchstens 50°C reagieren;
iv) man entfernt nicht umgesetzte Ausgangsmonomere aus dem Reaktionsprodukt von Schritt ii);
v) man lässt gegebenenfalls das Reaktionsmedium vor, während oder nach den Schritten i) bis iv) mit einem Maskierungsmittel reagieren;
wobei das Verfahren **dadurch charakterisiert** ist, dass man Schritt iii) bis zu einem Umsetzungsgrad von mindestens 56 % der im Anfangsreaktionsmedium vorhandenen Isocyanatmonomere durchführt.

18. Verfahren nach Anspruch 16 oder 17, **dadurch charakterisiert,** dass die Schritte ii-1) und iii-1) des Erwärmens des Reaktionsmediums mit einem abnehmenden Temperaturgradienten durchgeführt werden.

19. Verwendung einer Zusammensetzung nach einem der Ansprüche 1 bis 15 zur Herstellung eines Überzugs, insbesondere einer Farbe.

20. Reaktive Überzugszusammensetzung, umfassend eine Zusammensetzung nach einem der Ansprüche 1 bis 15 und ein Co-Reagenz das reaktiven Wasserstoff aufweist, zur aufeinanderfolgenden oder gleichzeitigen Zugabe.

21. Reaktive Überzugszusammensetzung nach Anspruch 20, wobei
- die Polyisocyanat-Zusammensetzung eine Viskosität zwischen ca. 1000 mPa • s und ca. 50000 mPa • s aufweist, und
- das Co-Reagenz, das reaktiven Wasserstoff aufweist, eine Polyol-Verbindung ist, die eine Hydroxylzahl zwischen ungefähr 50 und ungefähr 250 und ein Molekulargewicht zwischen ungefähr 500 und ungefähr 15000 aufweist.

22. Zusammensetzung nach Anspruch 21, wobei die Polyisocyanat-Zusammensetzung und das Polyol in wirksamen Verhältnissen zur Bereitstellung von 0,9 bis 2,0 Äquivalenten Isocyanatgruppen pro Äquivalent Hydroxylgruppen vorliegen.

23. Zusammensetzung nach Anspruch 21, wobei die Polyisocyanat-Zusammensetzung mehr als 40 Gew.-%, bezogen auf das Gesamtgewicht der Isocyanat-Oligomeren, von Polyisocyanat-Oligomer-Spezies umfasst, die mehr als drei wiederkehrende Monomereinheiten pro Molekül aufweisen.

24. Zusammensetzung nach Anspruch 21, wobei die Polyisocyanat-Zusammensetzung darüber hinaus Dimer-Spezies umfasst, von denen jede aus zwei wiederkehrenden Monomereinheiten pro Molekül besteht.

25. Zusammensetzung nach Anspruch 21 , wobei die Polyisocyanat-Zusammensetzung darüber hinaus Trimer-Spezies umfasst, von denen jede aus drei wiederkehrenden Monomereinheiten pro Molekül besteht.

26. Zusammensetzung nach Anspruch 21, wobei das Polyol ein Polyacrylatpolyol ist.

27. Zusammensetzung nach Anspruch 21, darüber hinaus umfassend einen Katalysator zur katalytischen Vernetzung der Zusammensetzung.

28. Zusammensetzung nach Anspruch 21, darüber hinaus umfassend ein Mittel zur Verlängerung der Topfzeit.

29. Verfahren zur Herstellung einer reaktiven Überzugs-Zusammensetzung nach einem der Ansprüche 20 bis 28, umfassend die folgenden Schritte:
- In-Kontakt-Bringen einer Polyisocyanat-Zusammensetzung, wie in einem der Ansprüche 1 bis 15 definiert, mit einem Co-Reagenz, das aktiven Wasserstoff aufweist; und
- Erwärmen des so gebildeten Reaktionsmediums auf eine Temperatur, die die Vernetzung der Komponenten ermöglicht.

30. Überzug, umfassend das Reaktionsprodukt der Vernetzung einer reaktiven Überzugs-Zusammensetzung nach einem der Ansprüche 20 bis 28.

31. Verfahren zur Herstellung eines Überzugs, umfassend Aufbringen einer Schicht der reaktiven Überzugs-Zusammensetzung nach einem der Ansprüche 20 bis 28 auf mindestens einen Teil mindestens einer Oberfläche eines Substrats, und die Vernetzung der Schicht aus der Überzugs-Zusammensetzung auf diesem Substrat.

32. Artikel, umfassend ein Substrat, welches eine Oberfläche und eine Beschichtung auf mindestens einem Teil dieser Oberfläche aufweist, wobei die Überzugsschicht das Reaktionsprodukt der Vernetzung der reaktiven Überzugs-Zusammensetzung nach einem der Ansprüche 20 bis 28 umfasst.
